# EUROPEAN PATENT SPECIFICATION

(11) **EP 4 349 881 B1**
(45) Date of publication and mention of the grant of the patent: **29.04.2026**
(21) Application number: 22931803.5
(22) Date of filing: 21.11.2022
(51) Int. Cl.: C08G 63/85, C08G 63/83, C08G 63/86, C08G 63/183, C08G 63/181, C08G 63/185, C08G 63/189, C08G 63/58, C08L 67/02, C08J 5/18, C08K 3/14, C08K 5/523, C08K 5/134, B32B 27/36

(54) **POLYESTER MATERIAL AND POLYESTER PRODUCT, AND PREPARATION METHODS THEREFOR AND USE THEREOF**
POLYESTERMATERIAL UND POLYESTERPRODUKT SOWIE HERSTELLUNGSVERFAHREN DAFÜR UND VERWENDUNG DAVON
MATÉRIAU EN POLYESTER ET PRODUIT EN POLYESTER, PROCÉDÉS DE PRÉPARATION S'Y RAPPORTANT ET LEUR UTILISATION

(30) Priority: 16.03.2022 CN 202210254870; 16.03.2022 CN 202210260797; 16.03.2022 CN 202210261610
(43) Date of publication of application: 10.04.2024
(73) Proprietor: Ningbo Institute of Materials Technology & Engineering, Chinese Academy of Sciences, Ningbo, Zhejiang 315201 (CN)
(72) Inventor: LIU, Xiaoqing, Ningbo, Zhejiang 315201 (CN); FEI, Xuan, Ningbo, Zhejiang 315201 (CN); JIANG, Yanhua, Ningbo, Zhejiang 315201 (CN)
(74) Representative: Bayramoglu et al.
(86) International application number: PCT/CN2022/133194
(87) International publication number: WO 2023/173791

(56) References cited:
- CN-A- 109 608 841
- CN-A- 110 229 319
- CN-A- 112 175 357
- CN-A- 113 549 207
- CN-A- 113 549 207
- CN-A- 113 754 873
- CN-A- 113 754 873
- CN-A- 114 479 041
- CN-A- 114 539 512
- CN-A- 114 591 606
- US-A1- 2019 181 543
- WANG XIONGGANG, LI XIA, CUI LINGNA, LIU YUEJUN, FAN SHUHONG: "Improvement of Gas Barrier Properties for Biodegradable Poly(butylene adipate-co-terephthalate) Nanocomposites with MXene Nanosheets via Biaxial Stretching", POLYMERS, vol. 14, no. 3, pages 480, XP093093105, DOI: 10.3390/polym14030480
- ZHAO QIAN; WANG BOWEN; QIN CHENYUAN; LI QIUXUAN; LIU CHUNTAI; SHEN CHANGYU; WANG YAMING: "Nonisothermal melt and cold crystallization behaviors of biodegradable poly(lactic acid)/Ti3C2Tx MXene nanocomposites", JOURNAL OF THERMAL ANALYSIS AND CALORIMETRY, KLUWER, DORDRECHT,, NL, vol. 147, no. 3, 6 February 2021 (2021-02-06), NL , pages 2239 - 2251, XP037670996, ISSN: 1388-6150, DOI: 10.1007/s10973-020-10502-7

## Description

### TECHNICAL FIELD

The present application relates to a polyester material, particularly to a polyester material related to a two-dimensional MXene material, a polyester product as well as a preparation method and use thereof, belonging to the technical field of high-performance polymer materials.

### BACKGROUND

Polyester is one of general polymer materials, is also an important engineering plastic and fiber raw material at the same time, has comprehensive performances such as high strength, high rigidity, high transparency, excellent thermal mechanical properties, as well as good heat resistance, dimensional stability and chemical resistance, and is widely applied, where high-crystalline polyester is widely applied to the aspects of electronics, automotive parts, mechanical equipment and the like. The poly(ethylene terephthalate) (PET) in the polyester is the most widely applied, which is limited in the non-fiber field due to its poor crystallinity. Specifically, in the field of industrial silk, the main problem of PET lies in high crystallization temperature and slow crystallization rate, resulting in uneven cooling during the drawing, which affects the mechanical properties of the final product; in the field of engineering plastics, there are drawbacks such as high molding temperature, long cycle time and difficult product demolding; in the field of optical thin films, the large spherulites and poor regularity lead to low light transmittance and uneven surface of the film. Therefore, the enhancement of the crystallization ability of PET and other polyesters has become a problem that is urgent to solve to expand their application fields. A catalyst has great influence on crystallization, thermal performance and mechanical performance in the production of polyester. At present, the widely used antimony catalysts can cause heavy metal pollution, which is not conducive to environmental safety and human health. Titanium catalysts are moderate in price and good in safety, and are strong competitors to antimony catalysts. However, at present, there are still urgent problems to be solved in industrial applications, such as high catalytic activity leading to more side reactions, severe thermal degradation in the later stage of the reaction, and poor product color. Germanium catalysts are expensive in price, poor in economy and low in catalytic activity. Therefore, the development of novel efficient polyester catalysts is crucial to production of polyesters.

Also, due to the rigid benzene ring structure of the polyester, the relatively slow crystallization rate has always been a limiting factor in its application in engineering plastics. Since MXene comes out in 2011, it has received widespread attention due to its unique nanostructure and conductivity, and has been rapidly applied in fields such as electromagnetic shielding and electronic sensing. CN 113 549 207 A describes blending the MXene material with a monomer, followed by curing and irradiation to obtain a Ti-loaded C material as a catalyst.

CN 113 754 873 A discloses the preparation of a polycondensation catalyst containing MXene material. However, it has not yet been reported on improving the crystallization rate of polyester materials and preparing engineering plastics.

### SUMMARY

The main objective of the present application is to provide a polyester material and a preparation method thereof in order to overcome the defects and problems existing in the prior art.

Another objective of the present application is to provide a preparation method of a polyester product and use thereof.

In order to realize the objectives of the above-mentioned invention, the technical solution adopted by the present application includes:
The embodiments of the present application provide a preparation method of a polyester material, consisting of: reacting a dibasic acid and/or a dibasic acid ester, diol, a two-dimensional MXene material catalyst, a second catalyst and a stabilizer to prepare the polyester material; or, performing melt blending on a polyester, a two-dimensional MXene material and an additive at a temperature of 115°C-295°C to prepare the polyester material, where the chemical formula of the two-dimensional MXene material is Mₙ₊₁XₙT_{X}, M is titanium and/or a combination of titanium and at least one of Sc, Y, Zr, Hf, V, Nb, Ta, Cr, Mo and W, X is carbon and/or nitrogen, n is any integral of 1-4, and Tₓ is -O, OH or -F.

With reference to steps order this is either:
reacting a dibasic acid and/or a dibasic acid ester, a second dibasic acid and/or a second dibasic acid ester which is selectively added or not added, diol, a two-dimensional MXene material as a first catalyst and a second catalyst to obtain a first intermediate product; and
then reacting the first intermediate product with a stabilizer to obtain the polyester material;
or, reacting a dibasic acid and/or a dibasic acid ester, a second dibasic acid and/or a second dibasic acid ester which is selectively added or not added, diol and a second catalyst to obtain a second intermediate product; and
then reacting the second intermediate product, the two-dimensional MXene material as the first catalyst and a stabilizer to obtain the polyester material.

With reference to performing melt blending on the polyester, the two-dimensional MXene material and an additive this is performed at the temperature of 115°C-295°C to obtain a quickly crystallized polyester composite.

The embodiments of the present application further provide use of the polyester material prepared by the above-mentioned preparation method in the fields of preparation of engineering plastics, optical films, industrial silk, or food packaging materials and the like.

The embodiments of the present application further provide a processing method of a polyester film, comprising:
feeding the polyester material prepared by the above-mentioned preparation method into a single-screw extruder for melt extrusion, and allowing the molten fluid to cast onto a rotary cooling roller to obtain a casting thick sheet; and
longitudinally stretching the casting thick sheet after preheating, then preheating again and transversely stretching the casting thick sheet, and then performing thermal setting to obtain the polyester film.

Compared with the prior art, the present application has the beneficial effects:
1) in the polyester material prepared in the present application, the two-dimensional MXene material as a catalyst and a nucleating agent are added into the reaction system, the MXene material therein not only acts as a highly active catalyst to achieve high molecular weight in a short period of time, reduce side reactions and thermal degradation during the polymerization process and obtain polyester products containing lower ether chain segments, but also can serve as an efficient nucleating agent to significantly improve the crystallization rate of the polyester; especially a biobased polyester has a green and sustainable biobased source, higher heat resistance, superior gas barrer performance, and mechanical properties. At the same time, the polyester products themselves have high heat resistance, excellent mechanical properties and impact resistance, and can be widely applied to the fields of engineering plastics, optical films, industrial silk, packaging materials, etc;
2) according to the present application, the two-dimensional MXene material can also be blended and added into the polyester, so that an interface binding force is improved by utilizing the strong interaction between a large number of polar functional groups such as - OH, - F, - O on its surface and oxygen atoms in the main chain of the polyester to allow the MXene material to be better dispersed in the polyester. The dispersed MXene can be used as the efficient nucleating agent to improve the originally poor crystallization performance of the polyester; and the polar functional groups on the surface of MXene have excellent electronic conduction performance and endow the polyester with aging resistance and UV resistance characteristics; in addition to conventional high heat resistance, fast crystallization and excellent mechanical properties are ensured, and therefore the polyester material of the present application can be applied in the fields of engineering plastics, food packaging materials and the like.

### BRIEF DESCRIPTION OF THE DRAWINGS

In order to more clearly illustrate the technical solutions in the embodiments of the present application or in the prior art, accompanying drawings required to be used in the embodiments or description in the prior art will be simply described, obviously, the drawings described below are only some embodiments recorded in the present application, and other drawings can also be obtained by a person of ordinary skill in the art according to these drawings without contributing creative labor.
FIG.1 is a scanning electron microscope (SEM) graph of a two-dimensional MXene material catalyst prepared in example 1 of the present application;
FIG.2 is an X-ray photoelectron (XPS) spectroscopy fine peak fitting graph of a two-dimensional MXene material catalyst prepared in example 1 of the present application;
FIG.3 is a comparison graph of semi-crystallization time of polyesters prepared in example 1 and comparative example 1 of the present application at different temperatures;
FIG.4 is a comparison bar graph of diethylene glycol (DEG) chain segment contents of polyesters prepared in example 1, comparative example 1 and comparative example 2 of the present application;
FIG.5 is an SEM graph of a two-dimensional MXene material catalyst prepared in example 25 of the present application;
FIG.6 is an XPS spectroscopy fine peak fitting graph of a two-dimensional MXene material catalyst prepared in example 25 of the present application;
FIG.7 is a comparison graph of semi-crystallization time of polyesters prepared in example 25 and comparative example 3 of the present application at different temperatures;
FIG.8 is a comparison bar graph of DEG chain segment contents of polyesters prepared in example 25, comparative example 3 and comparative example 4 of the present application;
FIG.9 is an SEM graph of MXene prepared in example 46 of the present application;
FIG.10 is an infrared spectrogram of MXene prepared in example 46 of the present application;
FIG.11 is an XPS graph of MXene prepared in example 46 of the present application;
FIG.12 is a semi-crystallization-temperature broken line graph of polyester composites prepared in example 46, example 47, comparative example 6 and comparative example 7 of the present application;
FIG.13 is a tensile modulus comparison graph of polyester composites prepared in example 46, example 47, comparative example 6 and comparative example 7 of the present application; and
FIG.14 is a tensile strength comparison graph of polyester composites prepared in example 46, example 47, comparative example 6 and comparative example 7 of the present application.

### DETAILED DESCRIPTION OF THE EMBODIMENTS

MXene is a two-dimensional carbide or nitride containing transition metals and has various functional groups such as - OH, - F, - O and the like on its surface. Since MXene comes out in 2011, it has received widespread attention due to its unique nanostructure and conductivity, and has been rapidly applied in the fields of filtration separation, catalysis, electromagnetic shielding, electronic sensing and the like. A large number of functional groups such as - OH, - F, - O and the like on the surface of MXene can strongly interact with oxygen atoms, in order to enhance an interface binding force and allow MXene to be more evenly dispersed. The dispersed MXene can be used as an efficient nucleating agent to improve the originally poor crystallization performance of the polyester. In addition, its excellent catalytic performance reduces reaction time, avoids excessive side reactions and thermal degradation, and decreases the production of energy consumption.

Next, the technical solution, its implementation process and principle and the like will be further explained and illustrated.

As described above, in view of the defects in the prior art, the inventor of this case has been able to propose the technical solution of the present application through long-term research and extensive practice. The main approach is to add a two-dimensional material MXene in the process of polyester synthesis, so as to improve the crystallization performance of the polyester while providing high activity catalytic effect, and prepare polyester products with low ether segment content and fast crystallization characteristics. The following specific embodiments, which should be read together with the accompanying drawings, will provide a more complete understanding of the present application. Detailed embodiments of the present application are disclosed herein; however, it should be understood that the disclosed embodiments are only exemplary embodiments of the present application and can be embodied in various forms. Therefore, the specific functional details disclosed herein should not be interpreted as restrictive, but only as the basis of the claims and used to teach a person skilled in the art to adopt the representative basis of the present application in different ways in any appropriate detailed embodiment in fact.

A preparation method of a polyester material (referred to as "polyester material efficiently catalyzed by a two-dimensional material") provided by one aspect of the embodiments of the present application comprises:
reacting a dibasic acid and/or a dibasic acid ester, diol, a two-dimensional MXene material as a first catalyst and a second catalyst to obtain a first intermediate product, where the chemical formula of the two-dimensional MXene material is Mₙ₊₁XₙTₓ, M is titanium and/or a combination of early transition metals (Sc, Y, Zr, Hf, V, Nb, Ta, Cr, Mo, W, etc), X is carbon and/or nitrogen, n is any integral of 1-4, and Tₓ is a functional group such as -O, OH or -F; and
reacting the first intermediate product with a stabilizer to obtain a polyester material efficiently catalyzed by a two-dimensional material.

In some embodiments, the preparation method specifically comprises the following steps:
under the protective atmosphere, reacting a first mixed reaction system comprising a dibasic acid and/or a dibasic acid ester, diol, a two-dimensional MXene material and a second catalyst for 1.5-6.0 h at 160-260°C to obtain a first intermediate product, where the chemical formula of the two-dimensional MXene material is Mₙ₊₁XₙTₓ, M is titanium and/or a combination of early transition metals (Sc, Y, Zr, Hf, V, Nb, Ta, Cr, Mo, W, etc), X is carbon and/or nitrogen, n is any integral of 1-4, and Tₓ is a functional group such as -O, OH or -F; and
reacting a second mixed reaction system comprising the first intermediate product and a stabilizer for 1.0-8 h at a temperature of 220-295°C at a vacuum degree of 100 Pa or less to obtain a polyester material efficiently catalyzed by the two-dimensional material.

A preparation method of a polyester material efficiently catalyzed by a two-dimensional material provided by another aspect of embodiments of the present application further comprises:
reacting a dibasic acid or a dibasic acid ester, diol and a second catalyst to obtain a second intermediate product; and
reacting the second intermediate product, a two-dimensional MXene material and a stabilizer to obtain the polyester material efficiently catalyzed by the two-dimensional material.

In some embodiments, the preparation method specifically comprises the following steps:
under the protective atmosphere, reacting a third mixed reaction system comprising the dibasic acid or the dibasic acid ester, diol and the second catalyst for 1.5-6.0 h at 160-260°C to obtain a second intermediate product; and
reacting a fourth reaction system comprising the second intermediate product, the foregoing two-dimensional material and the stabilizer for 1.0-8 h at a temperature of 220-295°C at a vacuum degree of 100 Pa or less to obtain the polyester material efficiently catalyzed by the two-dimensional material.

In some embodiments, the two-dimensional MXene material is obtained by etching Mₙ₊₁AXₙ to remove atoms, M is titanium and/or a combination of early transition metals (Sc, Y, Zr, Hf, V, Nb, Ta, Cr, Mo, W, etc), A is Al, Si, or Ga, X is carbon and/or nitrogen, and n is any integer of 1-4; the two-dimensional MXene material catalyst improves the crystallization performance of the polyester while providing a high-activity catalytic effect.

In the present application, the reaction mechanism for adding the two-dimensional MXene material catalyst in the preparation process as follows: MXene not only serves as a highly active polycondensation catalyst, which shortens the polymerization time to achieve higher molecular weight in shorter time, reduces reaction energy consumption and effectively inhibits thermal degradation and side reactions in the reaction system, so as to obtain the polyester product with relatively low ether chain segments, and a molar content of the ether chain segments in the obtained polyester is 0.5-2.7%, but also serves as an efficient nucleating agent to greatly improve the originally slow crystallization rate of the polyester, with the semi-crystallization time of being 6-44s.

In some embodiments, the dibasic acid or the dibasic acid ester comprises any one or a combination of more than two of terephthalic acid, isophthalic acid, phthalic acid, biphenyldicarboxylic acid, naphthalic acid, cyclohexanedicarboxylic acid, succinic acid, adipic acid, dimethyl terephthalate, dimethyl isophthalate, dimethyl phthalate, biphenyl dimethyl dicarboxylate, dimethyl naphthalate, dimethyl cyclohexanedicarboxylate, dimethyl succinate, dimethyl adipate and the like, but is not limited thereto.

In some embodiments, the diol comprises any one or a combination of more than two of ethylene glycol, propylene glycol, butylene glycol, pentylene glycol, hexylene glycol, neopentyl glycol, 1,4-cyclohexanedimethanol, 1,4-cyclohexanediol, dicyclopentylene glycol and the like, but is not limited thereto.

In some embodiments, the second catalyst is an esterification or ester exchange catalyst, comprising any one or a combination of more than two of a zinc catalyst, a manganese catalyst, a titanium catalyst, an antimony catalyst, a tin catalyst, a germanium catalyst and the like, but is not limited thereto.

Further, the manganese catalyst comprises manganese acetate, but is not limited thereto.

Further, the titanium catalyst comprises any one or a combination of more than two of tetrabutyl titanate, isopropyl titanate, titanium dioxide, inorganic titanium-supported catalyst and the like, but is not limited thereto.

Further, the antimony catalyst comprises any one or a combination of more than two of antimony trioxide, ethylene glycol antimony, antimony acetate and polyethylene glycol antimony, but is not limited thereto.

Further, the tin catalyst comprises any one or a combination of more than two of dibutyl tin oxide, stannous isocaprylate, monobutyl tin triisooctanoate and dioctyl tin oxide, but is not limited thereto.

Further, the germanium catalyst comprises germanium dioxide, germanium oxide and the like, but is not limited thereto.

In some embodiments, the stabilizer comprises any one or a combination of more than two ofphosphorous acid, hypophosphorous acid, pyrophosphoric acid, ammonium phosphate, trimethyl phosphate, dimethyl phosphate, triphenyl phosphate, diphenyl phosphate, triphenyl phosphite, diphenyl phosphite, ammonium phosphite, ammonium dihydrogen phosphate and the like, but is not limited thereto.

In some embodiments, a molar ratio of the diol to the dibasic acid and/or the dibasic acid ester is 120-300:100.

In some embodiments, a molar ratio of the two-dimensional MXene material to the dibasic acid and/or the dibasic acid ester is 0.01-3.0:100.

In some embodiments, a molar ratio of the second catalyst to the dibasic acid and/or the dibasic acid ester is 0-3.0:1000.

In some embodiments, a molar ratio of the stabilizer to the dibasic acid and/or the dibasic acid ester is 0.04-0.5:1000.

Another aspect of the embodiments of the present application further provides a polyester material which is prepared by the above-mentioned method and efficiently catalyzed by a two-dimensional material.

Further, the polyester material efficiently catalyzed by the two-dimensional material has a quick crystallization rate and semi-crystallization time of being 6-44 seconds, and the content (molar percentage) of the ether chain segments in the polyester is 0.5-2.7%.

Another aspect of the embodiments of the present application further provides a composite for synthesizing a polyester material efficiently catalyzed by a two-dimensional material, mainly comprising: a dibasic acid, diol and a two-dimensional MXene material.

In some specific embodiments, the composite for synthesizing the polyester material efficiently catalyzed by the two-dimensional material comprises:
component (a) comprising a dibasic acid and/or a dibasic acid ester;
component (b) comprising diol;
component (c) comprising a two-dimensional MXene material as a first catalyst, the chemical formula of the two-dimensional MXene material being Mₙ₊₁XₙTₓ, where M is titanium and/or a combination of titanium and at least one of Sc, Y, Zr, Hf, V, Nb, Ta, Cr, Mo and W, X is carbon and/or nitrogen, n is any integral of 1-4, and Tₓ is a functional group such as -O, OH or -F;
component (d) comprising a second catalyst; and
component (e) comprising a stabilizer.

The dibasic acid and/or the dibasic acid ester in the component (a) comprises any one or a combination of more than two of terephthalic acid, isophthalic acid, phthalic acid, biphenyldicarboxylic acid, naphthalic acid, cyclohexanedicarboxylic acid, succinic acid, adipic acid, dimethyl terephthalate, dimethyl isophthalate, dimethyl phthalate, biphenyl dimethyl dicarboxylate, dimethyl naphthalate, dimethyl cyclohexanedicarboxylate, dimethyl succinate, dimethyl adipate and the like, but is not limited thereto.

The diol in the component (b) comprises any one or a combination of more than two of ethylene glycol, propylene glycol, butylene glycol, pentylene glycol, hexylene glycol, neopentyl glycol, 1,4-cyclohexanedimethanol, 1,4-cyclohexanediol, dicyclopentylene glycol and the like, but is not limited thereto.

The types of the second catalyst in the component (d) and the stabilizer in the component (e) are all described above, and are not repeated here.

In some embodiments, a molar ratio of the diol in the component (b) to the dibasic acid and/or the dibasic acid ester in the component (a) is 120-300:100.

In some embodiments, a molar ratio of the two-dimensional MXene material in the component (c) to the dibasic acid and/or the dibasic acid ester in the component (a) is 0.01-3.0:100.

In some embodiments, a molar ratio of the second catalyst in the component (d) to the dibasic acid and/or the dibasic acid ester in the component (a) is 0-3.0:1000.

In some embodiments, a molar ratio of the stabilizer in the component (e) to the dibasic acid and/or the dibasic acid ester in the component (a) is 0.04-0.5:1000.

The polyester material efficiently catalyzed by the two-dimensional material provided by the embodiments of the present application has the advantages of short polymerization time, low energy consumption and short semi-crystallization time, and therefore this polyester can be applied to the non-fiber fields such as engineering plastics, optical films and industrial fibers.

Another aspect of the embodiments of the present application further provides a processing method of a polyester film, comprising:
feeding the above-mentioned polyester material efficiently catalyzed by the two-dimensional material into a single-screw extruder for melt extrusion at 220-295°C, and allowing molten fluid to cast onto a rotary cooling roller to obtain a casting thick sheet with a thickness of 500 µm-1000 µm; and
preheating the casting thick sheet to 50°C-110°C and then longitudinally stretching by 2-3 times, subsequently preheating again to 100°C-150°C and transversely stretching by 2.5-4 times, and then performing thermal setting at 230°C-280°C to obtain the polyester film.

Further, another aspect of the embodiments of the present application further provides a multi-layer composite film, comprising first structure layers and second structure layers which are laminated, the first structure layers and the second structure layers are bonded, and the first structure layers are films formed by the polyester material efficiently catalyzed by the above-mentioned two-dimensional material.

Another technical solution provided by another aspect of the embodiments of the present application is as follows: a two-dimensional material MXene is added in the process of biobased polyester synthesis, and therefore it, as a high-activity catalyst and an efficient nucleating agent, participates in preparation, in order to improve the crystallization performance of the polyester while increasing the activity catalyst effect, and obtain the biobased polyester product efficiently catalyzed by the two-dimensional material. MXene can not only quickly catalyze the polycondensation of the polyester, but also serve as an efficiently nucleating agent to greatly improve the crystallization rate of the polyester product. In addition, a large amount of functional groups on the surface of MXene can strongly interact with oxygen atoms on a furan ring, thereby improving the interface binding force and making MXene be more evenly dispersed.

Specifically, the preparation method of the polyester material provided by the embodiments of the present application comprises:
reacting a dibasic acid and/or a dibasic acid ester, a second dibasic acid and/or a second dibasic acid ester which is selectively added or not added, diol, a two-dimensional MXene material as a first catalyst and a second catalyst to obtain a third intermediate product, where the dibasic acid comprises any one or a combination of more than two of 2,5-furanedicarboxylic acid, 2,4-furanedicarboxylic acid, 2,3-furanedicarboxylic acid, 3,4-furanedicarboxylic acid and the like, but is not limited thereto.

Then reacting the third intermediate product with a stabilizer to obtain the polyester material.

In some embodiments, the preparation method specifically comprises the following steps:
(1) under the protective atmosphere, reacting a fifth mixed reaction system comprising a dibasic acid and/or a dibasic acid ester, a second dibasic acid and/or a second dibasic acid ester which is selectively added or not added, diol, the two-dimensional MXene material and a second catalyst for 1.0-6.5 h at 160-240°C to obtain a third intermediate product; and
(2) reacting a sixth mixed reaction system comprising the third intermediate product and the stabilizer for1.0-10.0 h at a temperature of 220-280°C at a vacuum degree of 100 Pa or less to obtain the polyester material.

The preparation method of the polyester material provided by another aspect of the embodiments of the present application further comprises:
reacting a dibasic acid and/or a dibasic acid ester, a second dibasic acid and/or a second dibasic acid ester which is selectively added or not added, diol and a second catalyst to obtain a fourth intermediate product; and
then reacting the fourth intermediate product, the two-dimensional MXene material as the first catalyst and the stabilizer to obtain the polyester material.

In some embodiments, the preparation method specifically comprises the following steps:
(i) under the protective atmosphere, reacting a seventh mixed reaction system comprising a dibasic acid and/or a dibasic acid ester, a second dibasic acid and/or a second dibasic acid ester which is selectively added or not added, diol and a second catalyst for 1.0-6.5 h at 160-240°C to obtain a fourth intermediate product; and
(ii) reacting an eighth mixed reaction system comprising the fourth intermediate product, the two-dimensional MXene material and the stabilizer for 1.0-10.0 h at a temperature of 220-280°C at a vacuum degree of 100 Pa or less to obtain the polyester material.

In some embodiments, the chemical formula of the two-dimensional MXene material is Mₙ₊₁XₙTₓ, where M is titanium and/or a combination of titanium and at least one of Sc, Y, Zr, Hf, V, Nb, Ta, Cr, Mo and W, X is carbon and/or nitrogen, n is any integral of 1-4, and Tₓ is -O, OH or -F.

In some embodiments, the dibasic acid ester can be any one or a combination of more than two of poly(ethylene 2,5-furandicarboxylate), poly(propylene 2,5-furandicarboxylate), poly(butylene 2,5-furandicarboxylate), poly(pentylene 2,5-furandicarboxylate) and the like, but is not limited thereto.

In some embodiments, the two-dimensional MXene material is obtained by etching Mₙ₊₁AXₙ to remove A atoms, M is titanium and/or a combination of titanium and an early transition metal element (Sc,Y, Zr, Hf, V, Nb, Ta, Cr, Mo, W, etc.), A is Al, Si, or Ga, X is carbon and/or nitrogen, and n is any integer of 1-4. The two-dimensional MXene material improves the crystallization performance of the biobased polyester while providing the high-activity catalytic effect.

In the present application, the reaction mechanism of adding the two-dimensional material in the preparation process is as follows: the two-dimensional MXene material may not only serve as a high-activity polycondensation catalyst, which shortens polymerization time, achieves the function of the high-activity catalyst, achieves relatively high molecular weight in short time, but also effectively inhibits thermal degradation and side reaction of the reaction system in the process of polymerization, and the content of the ether chain segment of the obtained polyester is 2.5-4.3%; furthermore, since the oxygen atoms in the furan ring can form interaction (such as a hydrogen bond) with polar groups in the two-dimensional MXene material, the two-dimensional MXene material also serves as an efficient nucleating agent to increase the crystallization rate of the polyester, with semi-crystallization time of 23-109s. At the same time, furan based polyesters have a green and sustainable biobased source, higher heat resistance, more excellent gas barrier performance and mechanical property, and can replace petroleum based polyesters such as PET to be applied to the fields such as engineering plastics, packaging materials..

In some embodiments, when the dibasic acid is 2,5-furandicarboxylic acid, 2,4-furandicarboxylic acid, 2,3-furandicarboxylic acid and 3,4-furandicarboxylic acid, a second dibasic acid may exist, and the second dibasic acid comprises any one or a combination of more than two of terephthalic acid, isophthalic acid, phthalic acid, cyclohexanedicarboxylic acid and the like, correspondingly, the second dibasic acid ester can be any one or a combination of more than two of dimethyl terephthalate, dimethyl isophthalate, dimethyl phthalate, dimethyl cyclohexanedicarboxylate, dimethyl succinate and the like, but is not limited thereto.

The types of the diol, the second catalyst (esterification or ester exchange catalysts), the stabilizer and the like are described as above, but are not repeated again herein.

In some embodiments, a molar ratio of the dibasic acid and/or the dibasic acid ester to the second dibasic acid and/or the second dibasic acid ester is 100:1-10000.

In some embodiments, a molar ratio of a combination of the dibasic acid and/or the dibasic acid ester and the second dibasic acid and/or the second dibasic acid ester to diol is 100:110-350.

In some embodiments, a molar ratio of a combination of the dibasic acid and/or the dibasic acid ester and the second dibasic acid and/or the second dibasic acid ester to the two-dimensional MXene material is 100:0.005-3.5.

In some embodiments, a molar ratio of a combination of the dibasic acid and/or the dibasic acid ester and the second dibasic acid and/or the second dibasic acid ester to the second catalyst is 1000:0-5.

In some embodiments, a molar ratio of a combination of the dibasic acid and/or the dibasic acid ester and the second dibasic acid and/or the second dibasic acid ester to the stabilizer is 1000:0.02-0.55.

Another aspect of the embodiments of the present application further provides a polyester material prepared by the above-mentioned method.

Further, the polyester material has a significantly increased crystallization rate and the semi-crystallization time of being 23-109 seconds, and the content of the ether chain segment (molar percentage) of the polyester material is 2.5-4.3%.

Further, the polyester material also has excellent gas barrier performance, specifically, the polyester material has a O₂ osmotic coefficient of 0.006-0.126 barrer and a CO₂ osmotic coefficient of 0.01-0.51 barrer.

Another aspect of the embodiments of the present application further provides a composite for synthesizing a polyester material, mainly comprising: a dibasic acid and/or a dibasic acid ester, a second dibasic acid and/or a second dibasic acid ester, diol and a two-dimensional MXene material.

In some specific embodiments, the composite for synthesizing the polyester material comprises:
component (A) comprising a dibasic acid and/or a dibasic acid ester, the dibasic acid comprising any one or a combination of more than two of 2,5-furanedicarboxylic acid, 2,4-furandicarboxylic acid, 2,3-furandicarboxylic acid and 3,4-furandicarboxylic acid;
component (B) comprising diol;
component (C) comprising a two-dimensional MXene material as a first catalyst, the chemical formula of the two-dimensional MXene material being Mₙ₊₁XₙTₓ, where M is titanium and/or a combination of titanium and at least one of early transition metals (Sc, Y, Zr, Hf, V, Nb, Ta, Cr, Mo and W), X is carbon and/or nitrogen, n is any integral of 1-4, and Tₓ is -O, OH or -F;
component (D) comprising a second catalyst;
component (E) comprising a stabilizer;
component (F), which is selectively added or not added, comprising a second dibasic acid and/or a second dibasic acid ester.

The types of the second dibasic acid, the diol, the second catalyst and the stabilizer are described as above, and are not repeated again here.

In some embodiments, a molar ratio of the component (A) to the component (F) is 100:1-10000.

In some embodiments, a molar ratio of a combination of the component (A) and the component (F) to the component (B) is 100:110-350, i.e., a molar ratio of a combination of the diol in the component (B) to the dibasic acid in the component (A) or an ester thereof and/or the second dibasic acid in the component (F) or an ester thereof is 110-350:100.

In some embodiments, a molar ratio of the combination of the component (A) and the component (F) to the component (C) is 100:0.005-3.5, i.e., a molar ratio of a combination of the two-dimensional MXene material in the component (C) to the dibasic acid in the component (A) or an ester thereof and/or the second dibasic acid in the component (F) or an ester thereof is 0.005-3.5:100.

In some embodiments, a molar ratio of the combination of the component (A) and the component (F) to the component (D) is 1000:0-5, i.e., a molar ratio of a combination of the second catalyst in the component (D) to the dibasic acid in the component (A) or an ester thereof and/or the second dibasic acid in the component (F) or an ester thereof is 0-5:1000.

In some embodiments, a molar ratio of the combination of the component (A) and the component (F) to the component (E) is 1000:0.02-0.55, i.e., a molar ratio of a combination of the stabilizer in the component (E) to the dibasic acid in the component (A) or an ester thereof and/or the second dibasic acid in the component (F) or an ester thereof is 0.02-0.55:1000.

The polyester material provided by the embodiments of the present application has the advantages of short polymerization time, low energy consumption and short semi-crystallization time, and therefore the polyester material can be applied to the non-fiber fields such as engineering plastics, optical films and industrial yarns.

Another aspect of the embodiments of the present application further provides a processing method of a polyester film, comprising:
feeding the above-mentioned polyester material into a single-screw extruder for melt extrusion at 200°C-280°C, and allowing molten fluid to cast onto a rotary cooling roller to obtain a casting thick sheet with a thickness of 600 µm-1200 µm; and
preheating the casting thick sheet to 30°C-100°C and then longitudinally stretching by 2-4 times, subsequently preheating again to 80°C-140°C and transversely stretching by 2-4 times, and then performing thermal setting at 200°C-260°C to obtain the polyester film.

Further, another aspect of the embodiments of the present application further provides a multi-layer composite film, comprising first structure layers and second structure layers which are laminated, the first structure layers and the second structure layers are bonded, and the first structure layers are films formed by the above-mentioned polyester material.

As another aspect of the present application, the inventor of this case unexpectedly discovers that the dispersed MXene can also serve as an efficient nucleating agent to improve the originally poor crystallization performance of the polyester. Furthermore, the polar functional groups on the surface of MXene have excellent electron conduction performance, so as to endow the polyester with the characteristics of aging resistance and ultraviolet ray resistance. A large amount of functional groups such as -OH, -F and -O on the surface of MXene can strongly interact with oxygen atoms in the main chain of the polyester, thereby enhancing an interface binding force and making MXene be more evenly dispersed.

A polyester material (referred to as "quickly crystallized polyester composite") provided by another aspect of the embodiments of the present application comprises a polyester, a two-dimensional MXene material and an additive, the chemical formula of the two-dimensional MXene material is Mₙ₊₁XₙTₓ, M is an early transition metal, X is carbon and/or nitrogen, n is any integral of 1-4, and Tₓ is a functional group such as -O, OH or -F. Furthermore, the quickly crystallized polyester composite is prepared by melt blending of the polyester, the two-dimensional material and the additive at a temperature of 115°C-295°C.

Further, M comprises any one or a combination of more than two of Ti, Sc, Y, Zr, Hf, V, Nb, Ta, Cr, Mo, W and the like, but is not limited thereto.

In some embodiments, the two-dimensional MXene material is obtained by etching Mₙ₊₁AXₙ to remove A atoms, M is an early transition metal element (Ti, Sc, Y, Zr, Hf, V, Nb, Ta, Cr, Mo, W and the like) or a composition thereof, A is Al, Si or Ga, X is carbon and/or nitrogen, and n is any integer of 1-4.

In some embodiments, a mass ratio of the two-dimensional MXene material to the polyester is 0.1-30:100.

In some embodiments, the polyester is a composition of a biobased polyester and/or other polyesters, specifically includes, but is not limited to any one or a combination of more than two of poly(ethylene furandicarboxylate), poly(propylene furandicarboxylate), poly(butylene furandicarboxylate), poly(pentylene furandicarboxylate), poly(hexylene furandicarboxylate), poly(cyclohexanedimethanol furandicarboxylate), poly(dicyclopentylene furandicarboxylate), poly(ethylene terephthalate), poly(propylene terephthalate), poly(butylene terephthalate), poly(pentylene terephthalate), poly(hexylene terephthalate), poly(cyclohexane ethylene dicarboxylate), poly(butylene succinate), poly(ethylene adipate), poly(ethylene naphthalate), poly(biphenyl ethylene dicarboxylate), poly(ethylene isophthalate), poly(ethylene phthalate), poly(terephthalate-ethylene furandicarboxylate) and poly(terephthalate-ethylene isophthalate).

In some embodiments, the additive comprises at least one of an antioxidant and a stabilizer.

Further, the stabilizer includes, but is not limited to at least one of phosphoric acid, phosphorous acid, hypophosphorous acid, pyrophosphoric acid, ammonium phosphate, trimethyl phosphate, dimethyl phosphate, triphenyl phosphate, diphenyl phosphate, triphenyl phosphite, diphenyl phosphite, phosphorous acid, ammonium dihydrogen phosphate and the like.

Further, the antioxidant includes but is not limited to at least one of an antioxidant-1010, an antioxidant-1076, an antioxidant-168 and the like.

In some embodiments, a mass ratio of the stabilizer in the additive to the polyester is 0.05-0.3:100.

In some embodiments, a mass ratio of the antioxidant in the additive to the polyester is 0.05-0.5:100.

In some more specific embodiments, the quickly crystallized polyester composite comprises:
(I) a polyester;
(II) a two-dimensional material Mₙ₊₁XₙTₓ (MXene), M is an early transition metal (Ti, Sc, Y, Zr, Hf, V, Nb, Ta, Cr, Mo, W and the like) or a composition thereof, X is carbon and/or nitrogen, n is 1-4, Tₓ is a surface functional group such as -O, -OH and -F;
(III) an additive comprising at least one of an antioxidant and a stabilizer.

By virtue of the above technical solution, the two-dimensional MXene material can also be blended and added into the polyester, so that an interface binding force is improved by utilizing the strong interaction between a large number of polar functional groups such as - OH, - F, - O on its surface and oxygen atoms in the main chain of the polyester to allow the MXene material to be better dispersed in the polyester, the excellent comprehensive performance of the composite is ensured, and the two-dimensional MXene material does not function as a catalyst. Specifically, the crystallization rate of the blended polyester composite is significantly increased, and the semi-crystallization time is 11-204s, preferably 30-70s. In addition, the excellent mechanical performance (the tensile strength of 5-98 MPa, and the tensile modulus of 0.08-2.2 GPa) of the quickly crystallized polyester composite of the present application can be also ensured.

Another aspect of the embodiments of the present application further provides a preparation method of a quickly crystallized polyester composite, comprising:
performing melt blending on a polyester, a two-dimensional MXene material and an additive at a temperature of 115°C-295°C to prepare a quickly crystallized polyester composite containing the two-dimensional MXene material.

In some embodiments, the melt blending comprises at least one of extruder melt blending and reactor melt blending.

Further, the reactor melt blending is carried out under a vacuum condition of 3-200 Pa, and the time for reactor melt blending is 0.5-6 hours.

Further, the extruder melt blending comprises single-screw extrusion melt blending or twin-screw extrusion melt blending, a temperature for extruder melt blending is 115°C-295°C, and a screw rotation speed is 5 rpm-35 rpm.

Further, the extruder melt blending comprises no less than five temperature zones; when six temperature zones are used, the temperatures of the six temperature zones are all 115°C-295°C, and the temperature of the latter temperature zone is not less than that of the former temperature zone.

Further, a mass ratio of the two-dimensional MXene material to the polyester is 0.1-30:100.

Further, a mass ratio of the stabilizer in the additive to the polyester is 0.05-0.3:100.

Further, a mass ratio of the antioxidant in the additive to the polyester is 0.05-0.5:100.

Further, another aspect of the embodiments of the present application provides a quickly crystallized polyester composite prepared by the above-mentioned method.

Another aspect of the embodiments of the present application further provides use of the above-mentioned quickly crystallized composite in the fields of preparation of engineering plastics or food package materials and the like.

Another aspect of the embodiments of the present application further provides a processing method of a plastic product, comprising: mixing the above-mentioned quickly crystallized composite with an enhancement material, and then processing the above mixture into a shape of a required product through at least one of mould pressing, lamination, transfer molding and casting, so as to obtain the required product.

Further, the enhancement material comprises mineral powder, glass fiber and the like, but is not limited thereto, and the addition amount of the enhancement material can be a commonly used addition amount that is well-known in the art.

Further, heating is often accompanied in the processes of the previously described moulding, lamination, transfer molding and casting processes, with a heating temperature of 180-250°C.

For example, a processing method of a molded plastic product provided by the embodiments of the present application comprises:
heating a mould to 180-250°C, adding the above-mentioned quickly crystallized polyester composite and 10-50wt% glass fiber into the mould, shaping at a pressure of 2-5 MPa, where a demoulding temperature is 165-235°C, and subsequently burrs are polished to obtain a glass fiber enhanced molded plastic product.

For example, another aspect of the embodiments of the present application further provides a multi-layer composite film structure, comprising a plurality of laminated structure layers which are made of film-shaped materials or flaky materials, where at least one structure layer is a film formed by the above-mentioned quickly crystallized polyester composite, or at least two adjacent structure layers are fixedly connected through the above-mentioned quickly crystallized polyester composite.

The quickly crystallized polyester composite provided by the present application has excellent comprehensive performance, ensures quick crystallization rate and excellent mechanical property except for conventional high thermal resistance, and can be applied to the fields of engineering, food packaging and the like.

Next, the polyester material will be further described through the following specific examples. Obviously, the described examples are only some examples of the present application, but not all. It should be noted that, the following descried examples are intended to facilitate the understanding of the present application without limiting the present application. Based on the examples in the present application, all other examples obtained by a person of ordinary skill in the art without contributing creative labor are all included within the scope of protection of the present application. Experimental methods where specific conditions are not denoted in the following examples typically conform to conventional conditions, or conditions recommended by manufacturers.

### Example 1

Dimethyl terephthalate and ethylene glycol were added into a reactor in a molar ratio of 1:2.1, then anhydrous zinc acetate which was 1‰ of a mole of dimethyl terephthalate was added, under the protection condition of nitrogen, a temperature was gradually increased to 180°C, the above materials reacted for 4.0 h, Ti₃C₂TₓMXene which was 1% of a mole of dimethyl terephthalate and trimethyl phosphate which was 0.5‰ of a mole of dimethyl terephthalate were then added, the temperature was gradually increased to 280°C, a vacuum degree was reduced to 20 Pa, and the above materials reacted for 2.3 h, so as to obtain poly(ethylene terephthalate). The molar content of the 2,2'-oxodiethanol chain segment DEG of the polyester was 1.2%, and the shortest semi-crystallization time of the polyester was 11s.

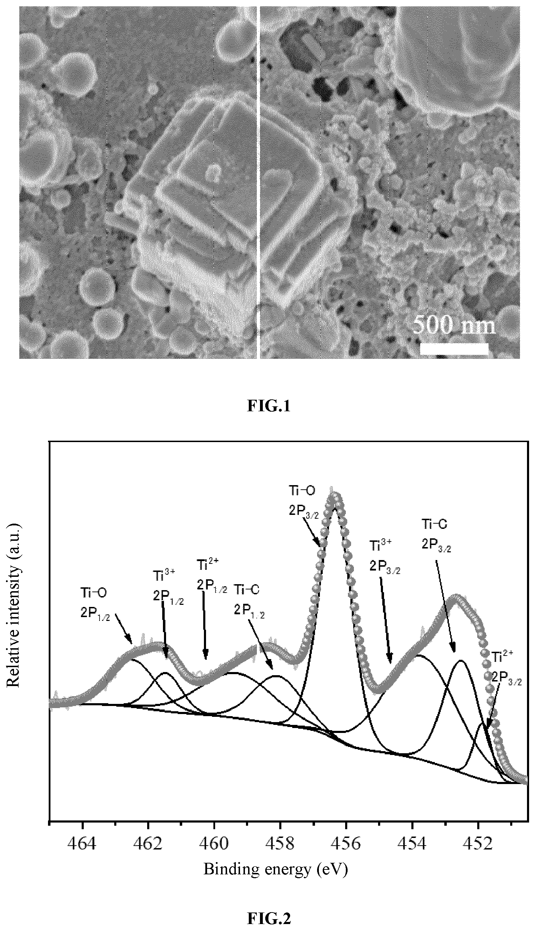

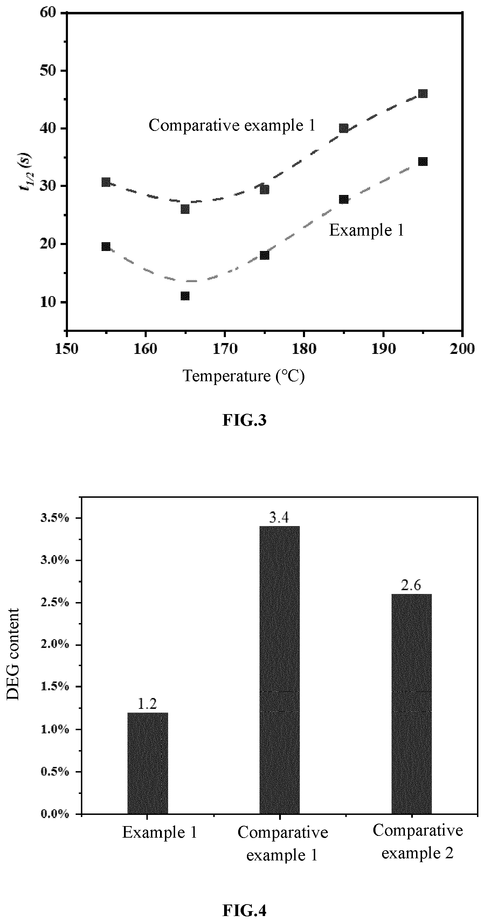

The inventor of this case also analyzed MXene used in this example. FIG.1 is its SEM graph from which it can be seen that the surface morphology is relatively rough. FIG.2 is its XPS peak fitting graph from which the distribution of titanium bonds on the surface can be seen. FIG.3 compares semi-crystallization time of the polyesters prepared in this example and comparative example 1, from which it can be seen that the semi-crystallization time of the polyester product using the two-dimensional MXene material catalyst is significantly shortened. FIG.4 is a comparison bar graph of DEG contents of a polyester product containing MXene and a common polyester, from which it can be seen that the DEG content of the polyester product containing MXene is relatively low, with a good product quality.

### Example 2

Dimethyl isophthalate and propylene glycol were added into a reactor in a molar ratio of 1:2.1, then manganese acetate which was 1.5‰ of a mole of dimethyl isophthalate was added, under the protection condition of nitrogen, a temperature was gradually increased to 185°C, the above materials reacted for 3.8 h, Ti₂CTₓMXene which was 0.5% of a mole of dimethyl isophthalate and dimethyl phosphate which was 0.4‰ of a mole of dimethyl isophthalate were then added, the temperature was gradually increased to 270°C, a vacuum degree was reduced to 20 Pa, and the above materials reacted for 2.5 h, so as to obtain poly(propylene isophthalate). The molar content of the 3,3'-oxodipropanol chain segment of the polyester was 2.0%, and the shortest semi-crystallization time of the polyester was 29s.

### Example 3

Dimethyl phthalate and hexylene glycol were added into a reactor in a molar ratio of 1:2.0, then tetrabutyl titanate which was 2‰ of a mole of dimethyl phthalate was added, under the protection condition of nitrogen, a temperature was gradually increased to 182°C, the above materials reacted for 3.0 h, Ti₃(C,N)₂TₓMXene which was 0.2% of a mole of dimethyl phthalate and triphenyl phosphate which was 0.3‰ of a mole of dimethyl phthalate were then added, the temperature was gradually increased to 240°C, a vacuum degree was reduced to 20 Pa, and the above materials reacted for 2.7 h, so as to obtain poly(butylene phthalate). The molar content of the 6,6'-oxodihexanol chain segment of the polyester was 2.1%, and the shortest semi-crystallization time of the polyester was 21s.

### Example 4

Biphenyl dimethyl dicarboxylate and pentylene glycol were added into a reactor in a molar ratio of 1:1.9, then dibutyl tin oxide which was 3‰ of a mole of biphenyl dimethyl dicarboxylate was added, under the protection condition of nitrogen, a temperature was gradually increased to 178°C, the above materials reacted for 5.0 h, (Ti,V)₂CTₓMXene which was 1% of a mole of biphenyl dimethyl dicarboxylate and diphenyl phosphate which was 0.2‰ of a mole of biphenyl dimethyl dicarboxylate were then added, the temperature was gradually increased to 275°C, a vacuum degree was reduced to 20 Pa, and the above materials reacted for 2.3 h, so as to obtain poly(biphenyl pentylene dicarboxylate). The molar content of the 5,5'-oxodipentanol chain segment of the polyester was 1.8%, and the shortest semi-crystallization time of the polyester was 22s.

### Example 5

Dimethyl naphthalate and hexylene glycol were added into a reactor in a molar ratio of 1:1.4, then antimony acetate which was 0.1‰ of a mole of dimethyl naphthalate was added, under the protection condition of nitrogen, a temperature was gradually increased to 220°C, the above materials reacted for 2.8 h, (Ti,Nb)₂CTₓMXene which was 2% of a mole of dimethyl naphthalene and triphenyl phosphite which was 0.25‰ of a mole of dimethyl naphthalene were then added, the temperature was gradually increased to 270°C, a vacuum degree was reduced to 12 Pa, and the above materials reacted for 2.8 h, so as to obtain poly(hexylene naphthalate). The molar content of the 6,6'-oxodihexanol chain segment of the polyester was 0.9%, and the shortest semi-crystallization time of the polyester was 29s.

### Example 6 (not part of the invention)

Dimethyl terephthalate and neopentyl glycol were added into a reactor in a molar ratio of 1:1.4, (Ti,V)₃C₂TₓMXene which was 0.5% of a mole of dimethyl terephthalate was then added, under the protection condition of nitrogen, a temperature was gradually increased to 190°C, the above materials reacted for 4.8 h, the diphenyl phosphite which was 0.15‰ of a mole of dimethyl terephthalate was added, the temperature was gradually increased to 275°C, a vacuum degree was reduced to 20 Pa, and the above materials reacted for 2.6 h, so as to obtain poly(neopentyl terephthalate). The molar content of the 3,3'-oxo(2,2-dimethylpropanol) chain segment of the polyester was 1.7%, and the shortest semi-crystallization time of the polyester was 33s.

### Example 7

Dimethyl succinate and 1,4-cyclohexanedimethanol were added into a reactor in a molar ratio of 1:1.2, germanium oxide which was 0.5‰ of a mole of dimethyl succinate was then added, under the protection condition of nitrogen, a temperature was gradually increased to 160°C, the above materials reacted for 6.0 h, then Ti₃(C,N)₂TₓMXene which was 0.05% of a mole of dimethyl succinate and ammonium dihydrogen phosphate which was 0.1‰ of a mole of dimethyl succinate were then added, the temperature was gradually increased to 250°C, a vacuum degree was reduced to 10 Pa, and the above materials reacted for 4.5 h, so as to obtain poly(cyclohexanedimethanol succinate). The molar content of the 6,6'-oxodicyclohexane methanol chain segment of the polyester was 2.4%, and the shortest semi-crystallization time of the polyester was 9s.

### Example 8

Dimethyl adipate and pentylene glycol were added into a reactor in a molar ratio of 1:1.3, then anhydrous zinc acetate that is 0.8‰ of a mole of dimethyl adipate was added, a temperature was gradually increased to 175°C, and the above materials reacted for 5.5 h. Then Ti₃(C,N)₂TₓMXene which was 0.15% of a mole of dimethyl adipate and a stabilizer ammonium phosphite which was 0.15‰ of a mole of dimethyl adipate were then added, the temperature was gradually increased to 245°C, a vacuum degree was reduced to 7.5 Pa, and the above materials reacted for 8.0 h, so as to obtain poly(pentylene adipate). The molar content of the 5,5'-oxodipentanol chain segment of the polyester was 1.6%, and the shortest semi-crystallization time of the polyester was 11s.

### Example 9

Dimethyl terephthalate and dicyclopentylene glycol were added into a reactor in a molar ratio of 1:1.4, then stannous isocaprylate which was 1.2‰ of a mole of dimethyl terephthalate was added, under the protection condition of nitrogen, a temperature was gradually increased to 200°C, the above materials reacted for 4.8 h, (Cr₂Ti)C₂TₓMXene which was 0.01% of a mole of dimethyl terephthalate and diphenyl phosphate which was 0.1‰ of a mole of dimethyl terephthalate were then added, the temperature was gradually increased to 270°C, a vacuum degree was reduced to 10 Pa, and the above materials reacted for 3.6 h, so as to obtain poly(dicyclopentylene terephthalate). The molar content of the 5,5'-oxodicyclopentylene glycol chain segment of the polyester was 2.5%, and the shortest semi-crystallization time of the polyester was 37s.

### Example 10

Terephthalic acid and 1,4-cyclohexanediol were added into a reactor in a molar ratio of 1:1.3, then manganese acetate which was 1.8‰ of a mole of terephthalic acid was added, under the protection condition of nitrogen, a temperature was gradually increased to 240°C, the above materials reacted for 1.5 h, Ti₄N₃TₓMXene which was 0.25% of a mole of terephthalic acid and triphenyl phosphate which was 0.04‰ of a mole of terephthalic acid were then added, the temperature was gradually increased to 295°C, a vacuum degree was reduced to 20 Pa, and the above materials reacted for 1.0 h, so as to obtain poly(cyclohexylene terephthalate). The molar content of the 4,4'-oxodicyclohexanol chain segment of the polyester was 2.7%, and the shortest semi-crystallization time of the polyester was 14s.

### Example 11

Dimethyl phthalate and 1,4-cyclohexanedimethanol were added into a reactor in a molar ratio of 1:1.2, then germanium dioxide which was 2.2‰ of a mole of dimethyl phthalate was added, under the protection condition of nitrogen, a temperature was gradually increased to 210°C, the above materials reacted for 2.6 h, (Mo₂Ti₂)C₃TₓMXene which was 1.5% of a mole of dimethyl phthalate and triphenyl phosphate which was 0.4‰ of a mole of dimethyl terephthalate were then added, the temperature was gradually increased to 290°C, a vacuum degree was reduced to 20 Pa, and the above materials reacted for 1.8 h, so as to obtain poly(cyclohexylene phthalate). The molar content of the 6,6'-oxodicyclohexanemethanol chain segment of the polyester was 2.1%, and the shortest semi-crystallization time of the polyester was 25s.

### Example 12

Biphenyl dimethyl dicarboxylate and neopentyl glycol were added into a reactor in a molar ratio of 1:1.8, then dioctyl tin oxide which was 2.8‰ of a mole of biphenyl dimethyl dicarboxylate was added, under the protection condition of nitrogen, a temperature was gradually increased to 190°C, the above materials reacted for 4.0 h, Ti₃C₂TₓMXene which was 2% of a mole of biphenyl dimethyl dicarboxylate and diphenyl phosphate which was 0.3‰ of a mole of diphenyl phosphate were then added, the temperature was gradually increased to 280°C, a vacuum degree was reduced to 10 Pa, and the above materials reacted for 4.6 h, so as to obtain poly(biphenyl neopentyl dicarboxylate). The molar content of the 3,3'-oxo(2,2-dimethylpropanol) chain segment of the polyester was 1.0%, and the shortest semi-crystallization time of the polyester was 44s.

### Example 13

Isophthalic acid and cyclohexanedimethanol were added into a reactor in a molar ratio of 1:1.3, then polyethylene glycol antimony which was 0.01‰ of a mole of isophthalic acid was added, under the protection condition of nitrogen, a temperature was gradually increased to 260°C, the above materials reacted for 1.5 h. Then (Ti,Nb)₄C₃TₓMXene which was 1.5% of a mole of isophthalic acid and a stabilizer ammonium phosphite which was 0.35‰ of a mole of isophthalic acid were then added, the temperature was gradually increased to 292°C, a vacuum degree was reduced to 7.5 Pa, and the above materials reacted for 1 h, so as to obtain poly(cyclohexane dimethyl isophthalate). The molar content of the 6,6'-oxodicyclohexane methanol chain segment of the polyester was 2.1%, and the shortest semi-crystallization time of the polyester was 25s.

### Example 14 (not part of the invention)

Phthalic acid and cyclohexane dimethanol were added into a reactor in a molar ratio of 1:1.2, then Ti₂CTₓMXene which was 0.05% of a mole of phthalic acid was added, under the protection condition of nitrogen, a temperature was gradually increased to 240°C, the above materials reacted for 3.0 h, and diphenyl phosphite which was 0.5‰ of a mole of phthalic acid were then added, the temperature was gradually increased to 295°C, a vacuum degree was reduced to 20 Pa, and the above materials reacted for 1.6 h, so as to obtain poly(cyclohexane dimethyl phthalate). The molar content of the 6,6'-oxodicyclohexane methanol chain segment of the polyester was 1.9%, and the shortest semi-crystallization time of the polyester was 28s.

### Example 15

Cyclohexanedicarboxylic acid and propylene glycol were added into a reactor in a molar ratio of 1:3.0, then antimony acetate which was 0.2‰ of a mole of cyclohexanedicarboxylic acid was added, under the protection condition of nitrogen, a temperature was gradually increased to 200°C, the above materials reacted for 3.6 h, Ti₃(C,N)₂TₓMXene which was 2.5% of a mole of cyclohexanedicarboxylic acid and ammonium dihydrogen phosphate which was 0.25‰ of a mole of cyclohexanedicarboxylic acid were then added, the temperature was gradually increased to 275°C, a vacuum degree was reduced to 20 Pa, and the above materials reacted for 3.2 h, so as to obtain poly(cyclohexane propylene dicarboxylate). The molar content of the 3,3'-oxodipropanol chain segment of the polyester was 1.3%, and the shortest semi-crystallization time of the polyester was 12s.

### Example 16

Succinic acid and ethylene glycol were added into a reactor in a molar ratio of 1:2.8, then polyethylene glycol antimony which was 0.5‰ of a mole of succinic acid was added, under the protection condition of nitrogen, a temperature was gradually increased to 180°C, the above materials reacted for 5.0 h, (Ti,V)₂CTₓMXene which was 3% of a mole of succinic acid and diphenyl phosphite which was 0.3‰ of a mole of succinic acid were then added, the temperature was gradually increased to 245°C, a vacuum degree was reduced to 30 Pa, and the above materials reacted for 4.6 h, so as to obtain poly(ethylene succinate). The molar content of the DEG chain segment of the polyester was 0.5%, and the shortest semi-crystallization time of the polyester was 11s.

### Example 17

Isophthalic acid and hexylene glycol were added into a reactor in a molar ratio of 1:1.4, then monobutyl tin triisooctanoate which was 1‰ of a mole of isophthalic acid was added, under the protection condition of nitrogen, a temperature was gradually increased to 240°C, the above materials reacted for 3.5 h, (Ti,Nb)₂CTₓMXene which was 2.8% of a mole of isophthalic acid and triphenyl phosphite which was 0.35‰ of a mole of isophthalic acid were then added, the temperature was gradually increased to 265°C, a vacuum degree was reduced to 25 Pa, and the above materials reacted for 1.2 h, so as to obtain poly(hexylene isophthalate). The molar content of the 6,6'-oxodihexanol chain segment of the polyester was 0.8%, and the shortest semi-crystallization time of the polyester was 24s.

### Example 18

Dimethyl succinate and butylene glycol were added into a reactor in a molar ratio of 1:1.8, then monobutyl tin triisooctanoate which was 1.2‰ of a mole of dimethyl succinate was added, under the protection condition of nitrogen, a temperature was gradually increased to 165°C, the above materials reacted for 5.4 h, (Ti,V)₃C₂TₓMXene which was 2.2% of a mole of dimethyl succinate and ammonium phosphite which was 0.4‰ of a mole of dimethyl succinate were then added, the temperature was gradually increased to 246°C, a vacuum degree was reduced to 12 Pa, and the above materials reacted for 2.8 h, so as to obtain poly(ethylene succinate). The molar content of the DEG chain segment of the polyester was 0.9%, and the shortest semi-crystallization time of the polyester was 8s.

### Example 19

Dimethyl adipate and propylene glycol were added into a reactor in a molar ratio of 1:1.6, then ethylene glycol antimony which was 1.5‰ of a mole of dimethyl adipate was added, under the protection condition of nitrogen, a temperature was gradually increased to 168°C, the above materials reacted for 6.0 h, Ti₃(C,N)₂T_{xMXene} which was 1.8% of a mole of dimethyl adipate and diphenyl phosphate which was 0.45‰ of a mole of dimethyl succinate were then added, the temperature was gradually increased to 220°C, a vacuum degree was reduced to 24 Pa, and the above materials reacted for 2 h, so as to obtain poly(propylene adipate). The molar content of the 3,3'-oxopropylene glycol chain segment of the polyester was 1.8%, and the shortest semi-crystallization time of the polyester was 6s.

### Example 20

Dimethyl cyclohexanedicarboxylate and butylene glycol were added into a reactor in a molar ratio of 1:2.1, then titanium dioxide which was 2‰ of a mole of dimethyl cyclohexanedicarboxylate was added, under the protection condition of nitrogen, a temperature was gradually increased to 210°C, the above materials reacted for 3.8 h, (Mo₂Ti)C₂TₓMXene which was 1.5% of a mole of dimethyl cyclohexanedicarboxylate and triphenyl phosphate which was 0.5‰ of a mole of dimethyl cyclohexanedicarboxylate were then added, the temperature was gradually increased to 260°C, a vacuum degree was reduced to 20 Pa, and the above materials reacted for 1.7 h, so as to obtain poly(cyclohexane butylene dicarboxylate). The molar content of the 4,4'-oxodibutanol chain segment of the polyester was 2.3%, and the shortest semi-crystallization time of the polyester was 14s.

### Example 21

Dimethyl terephthalate, dimethyl phthalate and propylene glycol were added into a reactor in a molar ratio of 0.95:0.05:2.1, then monobutyl tin triisooctanoate which was 1.2‰ of a total mole of dimethyl terephthalate and dimethyl phthalate was added, under the protection condition of nitrogen, a temperature was gradually increased to 180°C, the above materials reacted for 3.5 h, (Cr₂Ti)C₂TₓMXene which was 2.4% of a total mole of dimethyl terephthalate and dimethyl phthalate and triphenyl phosphite which was 0.32‰ of a total mole of dimethyl terephthalate and dimethyl phthalate were then added, the temperature was gradually increased to 270°C, a vacuum degree was reduced to 25 Pa, and the above materials reacted for 3.2 h, so as to obtain a poly(terephthalate-propylene phthalate)copolyester. The molar content of the 3,3'-oxopropylene glycol chain segment of the polyester was 0.8%, and the shortest semi-crystallization time of the polyester was 25s.

### Example 22

Dimethyl terephthalate, ethylene glycol and propylene glycol were added into a reactor in a molar ratio of 1:0.1:2.0, then polyethylene glycol antimony which was 0.02‰ of a mole of dimethyl terephthalate was added, under the protection condition of nitrogen, a temperature was gradually increased to 185°C, and the above materials reacted for 3.8 h. Then, Ti₄N₃TₓMXene which was 2.5% of a mole of dimethyl terephthalate and a stabilizer ammonium phosphite which was 0.15‰ of a mole of dimethyl terephthalate were then added, the temperature was gradually increased to 285°C, a vacuum degree was reduced to 7.5 Pa, and the above materials reacted for 1.2 h, so as to obtain a poly(ethylene-propylene phthalate)copolyester. The molar content of the DEG chain segment was 0.5%, the molar content of the 3,3'-oxodipropanol chain segment of the polyester was 0.5%, and the shortest semi-crystallization time of the polyester was 21s.

### Example 23

Dimethyl terephthalate, dimethyl succinate and ethylene glycol were added into a reactor in a molar ratio of 0.95:0.05:2.1, then germanium oxide which was 1.3‰ of a total mole of dimethyl terephthalate and dimethyl succinate was added, under the protection condition of nitrogen, a temperature was gradually increased to 180°C, the above materials reacted for 2.5 h, (Mo₂Ti₂)C₃TₓMXene which was 1.2% of a total mole of dimethyl terephthalate and dimethyl succinate and diphenyl phosphate which was 0.42‰ of a total mole of dimethyl terephthalate and dimethyl succinate were then added, the temperature was gradually increased to 280°C, a vacuum degree was reduced to 25 Pa, and the above materials reacted for 3.0 h, so as to obtain a poly(terephthalate-ethylene succinate)copolyester. The molar content of the DEG chain segment was 1.0%, and the shortest semi-crystallization time of the polyester was 20s.

### Comparative example 1

Dimethyl terephthalate and ethylene glycol were added into a reactor in a molar ratio of 1:2.1, then anhydrous zinc acetate which was 0.01‰ of a mole of dimethyl terephthalate was added, under the protection condition of nitrogen, a temperature was gradually increased to 180°C, the above materials reacted for 4.2 h, antimony trioxide which was 1.2% of a mole of dimethyl terephthalate and diphenyl phosphate which was 0.2‰ of a mole of dimethyl terephthalate were then added, the temperature was gradually increased to 280°C, a vacuum degree was reduced to 10 Pa, and the above materials reacted for 4 h, so as to obtain poly(ethylene terephthalate). The molar content of the DEG chain segment of the polyester was 3.4%, and the shortest semi-crystallization time of the polyester was 27s.

### Comparative example 2

Dimethyl terephthalate and ethylene glycol were added into a reactor in a molar ratio of 1:2.1, then anhydrous zinc acetate which was 0.01% of a mole of dimethyl terephthalate was added, under the protection condition of nitrogen, a temperature was gradually increased to 180°C, the above materials reacted for 4.6 h, unetched Mₙ₊₁AXₙ which was 0.8% of a mole of dimethyl terephthalate and diphenyl phosphate which was 0.3%0 of a mole of dimethyl terephthalate were then added, the temperature was gradually increased to 280°C, a vacuum degree was reduced to 10 Pa, and the above materials reacted for 4.2 h, so as to obtain poly(ethylene terephthalate). The molar content of the DEG chain segment of the polyester was 2.6%, and the shortest semi-crystallization time of the polyester was 31s.

### Example 24 A method for preparing a polyester film comprises:

The poly(ethylene terephthalate) prepared in example 1 was fed into a twin-screw extruder to undergo melt extrusion at 220°C-295°C, cast to a cooling roller to obtain a poly(ethylene terephthalate) thick sheet with a thickness of 500 µm-1000 µm. The thick sheet was heated to 50°C-110°C and then longitudinally stretched by 2-3 times, then heated again to 100°C-150°C and transversely stretched by 2.5-4 times, and subsequently subjected to thermal sizing at 230°C-280°C to obtain a poly(ethylene terephthalate) film.

### Example 25

Furan-2,5-dimethyl dicarboxylate and ethylene glycol were added into a reactor in a molar ratio of 1:2.1, then anhydrous zinc acetate which was 0.3‰ of a mole of furan-2,5-dimethyl dicarboxylate was added, under the protection condition of nitrogen, a temperature was gradually increased to 180°C, the above materials reacted for 4.0 h, a two-dimensional material (Mo₂Ti₂)C₃TₓMXene catalyst which was 1.0% of a mole of furan-2,5-dimethyl dicarboxylate and trimethyl phosphate which was 0.1‰ of a mole of furan-2,5-dimethyl dicarboxylate were then added, the temperature was gradually increased to 270°C, a vacuum degree was reduced to 20 Pa, and the above materials reacted for 2.0 h, so as to obtain poly(ethylene 2,5-furandicarboxylate). The molar content of the 2,2'-oxodiethanol chain segment DEG of the biobased polyester was 2.9%, and the shortest semi-crystallization time of the polyester was 62s, the O₂ osmotic coefficient was 0.008 barrer (1 barrer =10⁻¹⁰ cm³ cm/cm²·s·cmHg), and the CO₂ osmotic coefficient was 0.014 barrer.

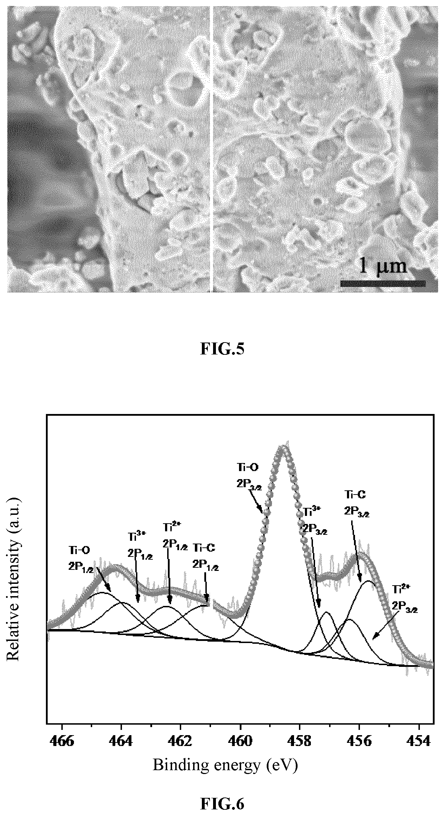

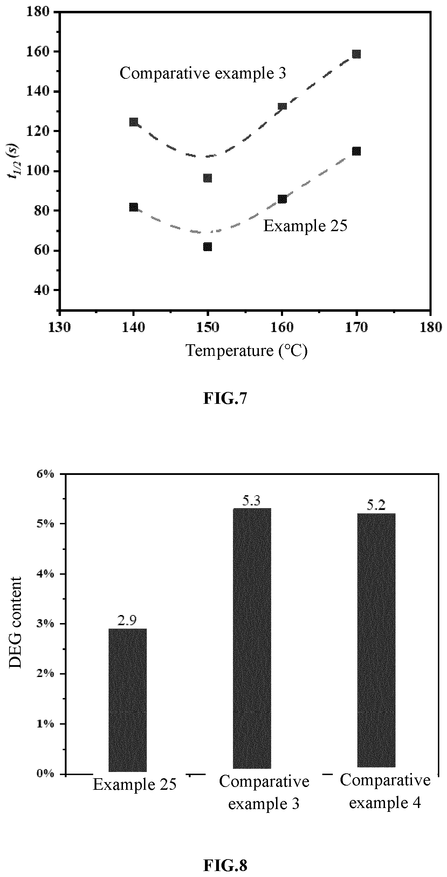

The inventor of this case also analyzed the two-dimensional MXene material catalyst used in this example. FIG.5 is its SEM from which it can be seen that the surface morphology is relatively rough. FIG.6 is its XPS peak fitting graph from which the distribution of the functional groups on the surface can be seen. The semi-crystallization time-temperature graph of the biobased polyester product prepared by using the two-dimensional MXene material catalyst is shown in FIG.7. FIG.8 shows comparison between the semi-crystallization time of the polyesters prepared in this example and comparative example 3, from which it can be seen that the semi-crystallization time of the polyester prepared by using the two-dimensional MXene material catalyst is obviously shortened.

### Example 26

Furan-2,4-dimethyl dicarboxylate and propylene glycol were added into a reactor in a molar ratio of 1:2.1, then manganese acetate which was 0.15‰ of a mole of furan-2,5-dimethyl dicarboxylate was added, under the protection condition of nitrogen, a temperature was gradually increased to 182°C, the above materials reacted for 4.2 h, a two-dimensional material Ti₄N₃TₓMXene catalyst which was 0.005% of a mole of furan-2,4-dimethyl dicarboxylate and trimethyl phosphate which was 0.2‰ of a mole of furan-2,5-dimethyl dicarboxylate were then added, the temperature was gradually increased to 265°C, a vacuum degree was reduced to 20 Pa, and the above materials reacted for 2.6 h, so as to obtain polypropylene 2,4-furandicarboxylate. The molar content of the 3,3'-oxodiethanol chain segment of the biobased polyester was 4.1%, and the shortest semi-crystallization time of the polyester was 84s, the O₂ osmotic coefficient was 0.015 barrer, and the CO₂ osmotic coefficient was 0.029 barrer.

### Example 27

Furan-3,4-dimethyl dicarboxylate and butylene glycol were added into a reactor in a molar ratio of 1:1.6, then tetrabutyl titanate which was 0.2‰ of a mole of furan-3,4-dimethyl dicarboxylate was added, under the protection condition of nitrogen, a temperature was gradually increased to 185°C, the above materials reacted for 3.5 h, a two-dimensional material (Cr₂Ti)C₂TₓMXene catalyst which was 0.5% of a mole of furan-3,4-dimethyl dicarboxylate and triphenyl phosphate which was 0.3‰ of a mole of furan-3,4-dimethyl dicarboxylate were then added, the temperature was gradually increased to 260°C, a vacuum degree was reduced to 20 Pa, and the above materials reacted for 3.8 h, so as to obtain polybutylene 3,4-furandicarboxylate. The molar content of the 4,4'-oxodibutanol chain segment of the biobased polyester was 3.6%, and the shortest semi-crystallization time of the polyester was 76s, the O₂ osmotic coefficient was 0.014 barrer, and the CO₂ osmotic coefficient was 0.026 barrer.

### Example 28

Furan-2,3-dimethyl dicarboxylate and pentylene glycol were added into a reactor in a molar ratio of 1:1.6, then dibutyl tin oxide which was 2‰ of a mole of furan-2,3-dimethyl dicarboxylate was added, under the protection condition of nitrogen, a temperature was gradually increased to 188°C, the above materials reacted for 4.6 h, a two-dimensional material (Mo₂Ti)C₂TₓMXene catalyst which was 1.0% of a mole of furan-2,3-dimethyl dicarboxylate and diphenyl phosphate which was 0.4‰ of a mole of furan-2,3-dimethyl dicarboxylate were then added, the temperature was gradually increased to 275°C, a vacuum degree was reduced to 20 Pa, and the above materials reacted for 4 h, so as to obtain polypentylene 2,3-furandicarboxylate. The molar content of the 5,5'-oxodipentanol chain segment of the biobased polyester was 3.3%, and the shortest semi-crystallization time of the polyester was 51s, the O₂ osmotic coefficient was 0.008 barrer, and the CO₂ osmotic coefficient was 0.012 barrer.

### Example 29

Furan-2,5-dimethyl dicarboxylate and hexylene glycol were added into a reactor in a molar ratio of 1:1.4, then anhydrous zinc acetate which was 1‰ of a mole of furan-2,5-dimethyl dicarboxylate was added, under the protection condition of nitrogen, a temperature was gradually increased to 160°C, the above materials reacted for 5.0 h, a two-dimensional material Ti₃(C,N)₂TₓMXene catalyst which was 2% of a mole of furan-2,5-dimethyl dicarboxylate and triphenyl phosphite which was 0.55‰ of a mole of furan-2,5-dimethyl dicarboxylate were then added, the temperature was gradually increased to 220°C, a vacuum degree was reduced to 12 Pa, and the above materials reacted for 3.5 h, so as to obtain polyhexylene 2,5-furandicarboxylate. The molar content of the 6,6'-oxodihexanol chain segment of the biobased polyester was 3.0%, and the shortest semi-crystallization time of the polyester was 43s, the O₂ osmotic coefficient was 0.008 barrer, and the CO₂ osmotic coefficient was 0.011 barrer.

### Example 30 (not part of the invetion)

Furan-2,4-dimethyl dicarboxylate and neopentyl glycol were added into a reactor in a molar ratio of 1:1.4, then (Ti,V)₃C₂TₓMXene which was 3% of a mole of furan-2,4-dimethyl dicarboxylate was added, under the protection condition of nitrogen, a temperature was gradually increased to 180°C, the above materials reacted for 3.0 h, diphenyl phosphite which was 0.02‰ of a mole of furan-2,4-dimethyl dicarboxylate was then added, the temperature was gradually increased to 255°C, a vacuum degree was reduced to 20 Pa, and the above materials reacted for 3.0 h, so as to obtain polyneopentyl 2,4-furandicarboxylate. The molar content of the 3,3'-oxo(2,2-dimethylpropanol) chain segment of the biobased polyester was 2.7%, and the shortest semi-crystallization time of the polyester was 81s, the O₂ osmotic coefficient was 0.015 barrer, and the CO₂ osmotic coefficient was0.028 barrer.

### Example 31

Furan-2,5-dimethyl dicarboxylate, dimethyl phthalate and 1,4-cyclohexanedimethanol were added into a reactor in a molar ratio of 0.9:0.1:1.2, then germanium oxide which was 5‰ of a total mole of furan-2,5-dimethyl dicarboxylate and dimethyl succinate was added, under the protection condition of nitrogen, a temperature was gradually increased to 195°C, the above materials reacted for 3.5 h, a two-dimensional material (Ti,Nb)₂CTₓMXene catalyst which was 0.05% of a total mole of furan-2,5-dimethyl dicarboxylate and dimethyl phthalate and ammonium dihydrogen phosphate which which was 0.35‰ of a total mole of furan-2,5-dimethyl dicarboxylate and dimethyl phthalate were then added, the temperature was gradually increased to 255°C, a vacuum degree was reduced to 10 Pa, and the above materials reacted for 3.8 h, so as to obtain a poly(2,5-furandicarboxylate-cyclohexane dimethyl phthalate)copolyester. The molar content of the 6,6'-oxodicyclohexane methanol chain segment of the biobased polyester was 3.8%, and the shortest semi-crystallization time of the polyester was 45s, the O₂ osmotic coefficient was 0.007 barrer, and the CO₂ osmotic coefficient was 0.015 barrer.

### Example 32

Furan-3,4-dimethyl dicarboxylate and 1,4-cyclohexanediol were added into a reactor in a molar ratio of 1:1.2, then anhydrous zinc acetate which was 0.2‰ of a mole of furan-3,4-dimethyl dicarboxylate was added, a temperature was gradually increased to 240°C, the above materials reacted for 1.0 h. Then a two-dimensional material (Ti,V)₂CTₓMXene catalyst which was 0.4% of a mole of furan-3,4-dimethyl dicarboxylate and a stabilizer ammonium phosphite which was 0.4‰ of a mole of furan-3,4-dimethyl dicarboxylate were then added, the temperature was gradually increased to 265°C, a vacuum degree was reduced to 7.5 Pa, and the above materials reacted for 3.5 h, so as to obtain a poly(cyclohexylene 3,4-furandicarboxylate). The molar content of the 4,4'-oxodicyclohexanol chain segment of the biobased polyester was 3.5%, and the shortest semi-crystallization time of the polyester was 51s, the O₂ osmotic coefficient was 0.007 barrer, and the CO₂ osmotic coefficient was 0.012 barrer.

### Example 33

Furan-2,5-dimethyl dicarboxylate, furan-3,4-dimethyl dicarboxylate and ethylene glycol were added into a reactor in a molar ratio of 1:0.05:2.1, then stannous isocaprylate which was 0.05‰ of a total mole of furan-2,5-dimethyl dicarboxylate, furan-3,4-dimethyl dicarboxylate was added, under the protection condition of nitrogen, a temperature was gradually increased to 185°C, the above materials reacted for 3.2 h, a two-dimensional material Ti₃(C,N)₂TₓMXene catalyst which was 0.05% of a total mole of furan-2,5-dimethyl dicarboxylate and furan-3,4-dimethyl dicarboxylate and diphenyl phosphate which was 0.25‰ of a total mole of furan-2,5-dimethyl dicarboxylate and furan-3,4-dimethyl dicarboxylate were then added, the temperature was gradually increased to 245°C, a vacuum degree was reduced to 10 Pa, and the above materials reacted for 1.0 h, so as to obtain a poly(2,5-furandicarboxylate-ethylene 3,4-furandicarboxylate)copolyester. The molar content of the DEG chain segment of the biobased polyester was 2.9%, and the shortest semi-crystallization time of the polyester was 94s, the O₂ osmotic coefficient was 0.022 barrer, and the CO₂ osmotic coefficient was 0.031 barrer.

### Example 34

Furan-2,4-dimethyl dicarboxylate and propylene glycol were added into a reactor in a molar ratio of 1:2.1, then manganese acetate which was 0.1‰ of a mole of furan-2,4-dimethyl dicarboxylate was added, under the protection condition of nitrogen, a temperature was gradually increased to 160°C, the above materials reacted for 6.5 h, a two-dimensional material Ti₂CTₓMXene catalyst which was 3.5% of a mole of furan-2,4-dimethyl dicarboxylate and triphenyl phosphate which was 0.15‰ of a mole of furan-2,4-dimethyl dicarboxylate were then added, the temperature was gradually increased to 240°C, a vacuum degree was reduced to 20 Pa, and the above materials reacted for 5.5 h, so as to obtain poly(propylene 2,4-furandicarboxylate). The molar content of the 3,3'-oxodipropanol chain segment of the biobased polyester was 2.5%, and the shortest semi-crystallization time of the polyester was 89s, the O₂ osmotic coefficient was 0.019 barrer, and the CO₂ osmotic coefficient was 0.033 barrer.

### Example 35

Furan-3,4-dimethyl dicarboxylate and ethylene glycol were added into a reactor in a molar ratio of 1:2.1, then dioctyl tin oxide which was 0.2‰ of a mole of furan-3,4-dimethyl dicarboxylate was added, under the protection condition of nitrogen, a temperature was gradually increased to 190°C, and the above materials reacted for 2.5 h. Then, a two-dimensional material (Ti,Nb)₄C₃TₓMXene catalyst which was 1.4% of a mole of furan-3,4-dimethyl dicarboxylate and a stabilizer ammonium dihydrogen phosphate which was 0.04‰ of a mole of furan-3,4-dimethyl dicarboxylate were then added, the temperature was gradually increased to 276°C, a vacuum degree was reduced to 17 Pa, and the above materials reacted for 2.5 h, so as to obtain poly(ethylene 3,4-furandicarboxylate). The molar content of the DEG of the biobased polyester was 3.6%, and the shortest semi-crystallization time of the polyester was 70s, the O₂ osmotic coefficient was 0.015 barrer, and the CO₂ osmotic coefficient was 0.024 barrer.

### Example 36

Furan-2,3-dimethyl dicarboxylate and propylene glycol were added into a reactor in a molar ratio of 1:2.1, then polyethylene glycol antimony which was 3‰ of a mole of furan-2,3-dimethyl dicarboxylate was added, under the protection condition of nitrogen, a temperature was gradually increased to 178°C, the above materials reacted for 4.8 h, a two-dimensional material Ti₃C₂TₓMXene catalyst which was 2.8% of a mole of furan-2,3-dimethyl dicarboxylate and hypophosphorous acid which was 0.05‰ of a mole of furan-2,3-dimethyl dicarboxylate were then added, the temperature was gradually increased to 280°C, a vacuum degree was reduced to 10 Pa, and the above materials reacted for 2.8 h, so as to obtain polypropylene 2,3-furandicarboxylate. The molar content of the 3,3'-oxodipropanol chain segment DEG of the biobased polyester was 2.6%, and the shortest semi-crystallization time of the polyester was 74s, the O₂ osmotic coefficient was 0.014 barrer, and the CO₂ osmotic coefficient was 0.025 barrer.

### Example 37 (not part of the invention)

Furan-2,4-dimethyl dicarboxylate and dicyclopentanediol were added into a reactor in a molar ratio of 1:1.6, then (Mo₂Ti₂)C₃TₓMXene which was 3% of a mole of furan-2,4-dimethyl dicarboxylate was added, under the protection condition of nitrogen, a temperature was gradually increased to 190°C, the above materials reacted for 3.0 h, and dimethyl phosphate which was 0.08‰ of a mole of furan-2,4-dimethyl dicarboxylate was then added, the temperature was gradually increased to 240°C, a vacuum degree was reduced to 20 Pa, and the above materials reacted for 3.8 h, so as to obtain poly(dicyclopentylene furandicarboxylate). The molar content of the 5,5'-oxodicyclopentanol chain segment of the biobased polyester was 3.0%, and the shortest semi-crystallization time of the polyester was 109s, the O₂ osmotic coefficient was 0.033 barrer, and the CO₂ osmotic coefficient was 0.046 barrer.

### Example 38

Furan-2,5-dimethyl dicarboxylate and hexylene glycol were added into a reactor in a molar ratio of 1:1.4, then germanium oxide which was 1‰ of a mole of furan-2,5-dimethyl dicarboxylate was added, under the protection condition of nitrogen, a temperature was gradually increased to 178°C, the above materials reacted for 3.6 h, a two-dimensional material Ti₄N₃TₓMXene catalyst which was 1% of a mole of furan-2,5-dimethyl dicarboxylate and diphenyl phosphate which was 0.1‰ of a mole of furan-2,5-dimethyl dicarboxylate were then added, the temperature was gradually increased to 220°C, a vacuum degree was reduced to 12 Pa, and the above materials reacted for 10.0 h, so as to obtain polyhexylene (2,5-furandicarboxylate). The molar content of the 6,6'-oxodihexanol chain segment of the biobased polyester was 3.9%, and the shortest semi-crystallization time of the polyester was 36s, the O₂ osmotic coefficient was 0.006 barrer, and the CO₂ osmotic coefficient was 0.01 barrer.

### Example 39

Furan-2,3-dimethyl dicarboxylate and ethylene glycol were added into a reactor in a molar ratio of 1:2.1, then dibutyl tin oxide which was 2‰ of a mole of furan-2,3-dimethyl dicarboxylate was added, under the protection condition of nitrogen, a temperature was gradually increased to 182°C, the above materials reacted for 4.0 h, a two-dimensional material (Cr₂Ti)C₂TₓMXene catalyst which was 2.4% of a mole of furan-2,3-dimethyl dicarboxylate and ammonium dihydrogen phosphate which was 0.2‰ of a mole of furan-2,3-dimethyl dicarboxylate were then added, the temperature was gradually increased to 275°C, a vacuum degree was reduced to 20 Pa, and the above materials reacted for 3.2 h, so as to obtain poly(ethylene 2,3-furandicarboxylate). The molar content of the DEG chain segment of the biobased polyester was 2.5%, and the shortest semi-crystallization time of the polyester was 68s, the O₂ osmotic coefficient was 0.014 barrer, and the CO₂ osmotic coefficient was 0.013 barrer.

### Example 40

Dimethyl terephthalate, furan-2,5-dimethyl dicarboxylate and propylene glycol were added into a reactor in a molar ratio of 0.95:0.05:2.1, then monobutyl tin triisooctanoate which was 0.2‰ of a total mole of furan-2,5-dimethyl dicarboxylate was added, under the protection condition of nitrogen, a temperature was gradually increased to 190°C, the above materials reacted for 4.0 h, a two-dimensional material (Mo₂Ti)C₂TₓMXene catalyst which was 0.5% of a total mole of dimethyl terephthalate and furan-2,5-dimethyl dicarboxylate and triphenyl phosphite which was 0.15‰ of a total mole of dimethyl terephthalate and furan-2,5-dimethyl dicarboxylate were then added, the temperature was gradually increased to 270°C, a vacuum degree was reduced to 20 Pa, and the above materials reacted for 2.8 h, so as to obtain a poly(terephthalate-propylene 2,5-furandicarboxylate) copolyester. The molar content of the 3,3'-oxodipropanol chain segmentof the biobased polyester was 4.3%, and the shortest semi-crystallization time of the polyester was 23s, the O₂ osmotic coefficient was 0.126 barrer, and the CO₂ osmotic coefficient was 0.51 barrer.

### Example 41

2,5-furanedicarboxylic acid and pentylene glycol were added into a reactor in a molar ratio of 1:3.5, then isopropyl titanate which was 0.5‰ of a mole of 2,5-furanedicarboxylic acid was added, under the protection condition of nitrogen, a temperature was gradually increased to 210°C, the above materials reacted for 2.5 h, a two-dimensional material Ti₃(C,N)₂TₓMXene catalyst which was 0.5% of a mole of 2,5-furanedicarboxylic acid and pyrophosphoric acid which was 0.3‰ of a mole of 2,5-furanedicarboxylic acid were then added, the temperature was gradually increased to 250°C, a vacuum degree was reduced to 15 Pa, and the above materials reacted for 3.8 h, so as to obtain poly(pentylene 2,5-furanedicarboxylate). The molar content of the 5,5'-oxodipentanol chain segment of the biobased polyester was 3.8%, and the shortest semi-crystallization time of the polyester was 48s, the O₂ osmotic coefficient was 0.009 barrer, and the CO₂ osmotic coefficient was 0.014 barrer.

### Example 42

2,5-furanedicarboxylic acid and cyclohexylene glycol were added into a reactor in a molar ratio of 1:1.1, then polyethylene glycol antimony which was 2‰ of a mole of 2,5-furanedicarboxylic acid was added, under the protection condition of nitrogen, a temperature was gradually increased to 220°C, the above materials reacted for 2.0 h, a two-dimensional material (Ti,V)₃C₂TₓMXene catalyst which was 1.2% of a mole of 2,5-furanedicarboxylic acid and hypophosphite which was 0.3‰ of a mole of 2,5-furanedicarboxylic acid were then added, the temperature was gradually increased to 280°C, a vacuum degree was reduced to 15 Pa, and the above materials reacted for 2.8 h, so as to obtain a poly(cyclohexylene 2,5-furanedicarboxylate) copolyester. The molar content of the 6,6'-oxodicyclohexanol chain segment of the biobased polyester was 3.2%, and the shortest semi-crystallization time of the polyester was 53s, the O₂ osmotic coefficient was 0.010 barrer, and the CO₂ osmotic coefficient was 0.017 barrer.

### Example 43

Furan-2,5-dimethyl dicarboxylate, dimethyl terephthalate and ethylene glycol were added into a reactor in a molar ratio of 1:0.05:2.1, then stannous isocaprylate which was 5‰ of a total mole of furan-2,5-dimethyl dicarboxylate and dimethyl terephthalate was added, under the protection condition of nitrogen, a temperature was gradually increased to 185°C, the above materials reacted for 4.2 h, a two-dimensional material (Ti,Nb)₂CTₓMXene catalyst which was 2.0% of a total mole of dimethyl terephthalate and furan-2,5-dimethyl dicarboxylate and diphenyl phosphate which was 0.25‰ of a total mole of furan-2,5-dimethyl dicarboxylate and dimethyl terephthalate were then added, the temperature was gradually increased to 250°C, a vacuum degree was reduced to 10 Pa, and the above materials reacted for 1.0 h, so as to obtain poly(2,5-furandicarboxylate-ethylene terephthalate) copolyester. The molar content of the DEG chain segment of the biobased polyester was 2.9%, and the shortest semi-crystallization time of the polyester was 67s, the O₂ osmotic coefficient was 0.014 barrer, and the CO₂ osmotic coefficient was 0.017 barrer.

### Example 44

Furan-2,5-dimethyl dicarboxylate, dimethyl isophthalate and butylene glycol were added into a reactor in a molar ratio of 1:0.05:1.6, then isopropyl titanate which was 0.15‰ of a total mole of furan-2,5-dimethyl dicarboxylate and dimethyl isophthalate was added, under the protection condition of nitrogen, a temperature was gradually increased to 182°C, the above materials reacted for 3.2 h, a two-dimensional material (Ti,V)₂CTₓMXene catalyst which was 1.5% of a total mole of furan-2,5-dimethyl dicarboxylate and dimethyl isophthalate and triphenyl phosphate which was 0.1‰ of a total mole of furan-2,5-dimethyl dicarboxylate and dimethyl isophthalate were then added, the temperature was gradually increased to 245°C, a vacuum degree was reduced to 10 Pa, and the above materials reacted for 2.0 h, so as to obtain a poly(2,5-furanedicarboxylate-butylene isophthalate) copolyester. The molar content of the 4,4'-oxodibutanol chain segment of the biobased polyester was 3.1%, and the shortest semi-crystallization time of the polyester was 52s, the O₂ osmotic coefficient was 0.011 barrer, and the CO₂ osmotic coefficient was 0.016 barrer.

### Comparative example 3

Furan-2,5-dimethyl dicarboxylate and ethylene glycol were added into a reactor in a molar ratio of 1:2.1, then anhydrous zinc acetate which was 1.3‰ of a mole of furan-2,5-dimethyl dicarboxylate was added, under the protection condition of nitrogen, a temperature was gradually increased to 185°C, the above materials reacted for 4.0 h, antimony trioxide which was 0.8% of a mole of furan-2,5-dimethyl dicarboxylate and diphenyl phosphate which was 0.35‰ of a mole of furan-2,5-dimethyl dicarboxylate were then added, the temperature was gradually increased to 270°C, a vacuum degree was reduced to 10 Pa, and the above materials reacted for 3.5 h, so as to obtain poly(ethylene 2,5-furandicarboxylate). The molar content of the DEG chain segment of the biobased polyester was 5.3%, and the shortest semi-crystallization time of the polyester was 96s, the O₂ osmotic coefficient was 0.014 barrer, and the CO₂ osmotic coefficient was 0.029 barrer.

### Comparative example 4

Furan-2,5-dimethyl dicarboxylate and ethylene glycol were added into a reactor in a molar ratio of 1:2.1, then anhydrous zinc acetate which was 1.1‰ of a mole of furan-2,5-dimethyl dicarboxylate was added, under the protection condition of nitrogen, a temperature was gradually increased to 180°C, the above materials reacted for 4.5 h, unetched Mₙ₊₁AXₙ which was 2.8% of a mole of furan-2,5-dimethyl dicarboxylate and diphenyl phosphate which was 0.3‰ of a mole of furan-2,5-dimethyl dicarboxylate were then added, the temperature was gradually increased to 260°C, a vacuum degree was reduced to 10 Pa, and the above materials reacted for 3.6 h, so as to obtain poly(ethylene 2,5-furandicarboxylate). The molar content of the DEG chain segment of the biobased polyester was 5.2%, and the shortest semi-crystallization time of the polyester was 109s, the O₂ osmotic coefficient was 0.018 barrer, and the CO₂ osmotic coefficient was 0.031 barrer.

### Comparative example 5

Dimethyl terephthalate and ethylene glycol were added into a reactor in a molar ratio of 1:2.1, then monobutyl tin triisooctanoate which was 0.2‰ of a mole of dimethyl terephthalate was added, under the protection condition of nitrogen, a temperature was gradually increased to 185°C, the above materials reacted for 4.0 h, a dimensional material (Mo₂Ti)C₂TₓMXene which was 0.48% of a mole of dimethyl terephthalate and triphenyl phosphite which was 0.15‰ of a mole of dimethyl terephthalate were then added, the temperature was gradually increased to 280°C, a vacuum degree was reduced to 20 Pa, and the above materials reacted for 2.9 h, so as to obtain a poly(ethylene phthalate) copolyester. The molar content of the DEG chain segment of the biobased polyester was 4.5%, and the shortest semi-crystallization time of the polyester was 31s, the O₂ osmotic coefficient was 0.102 barrer, and the CO₂ osmotic coefficient was 0.437 barrer.

**Example 45** A preparation method of a biobased polyester film comprises:
Poly(ethylene 2,5-furan dicarboxylate) prepared in example 1 was fed into a twin-screw extruder for melt extrusion at 200°C-280°C, and then cast to a cooling roller to obtain a poly(ethylene terephthalate) thick sheet with a thickness of 600 µm-1200 µm. The thick sheet was heated to 30°C-100°C and then longitudinally stretched by 2-4 times, afterwards, heated to 80°C-140°C and transversely stretched by 2-4 times, followed by thermal sizing at 200°C-260°C, so as to obtain a poly(2,5-furan ethylene glycol dicarboxylate) film.

### Example 46

Furan ethylene glycol dicarboxylate, Ti₃C₂TₓMXene, triphenyl phosphate and antioxidant-100 were evenly mixed in a mass ratio of 1:0.1:0.001:0.002 and then added into a reactor, the reactor was slowly vacuumized to 10 Pa and below, the temperature was increased to 255°C, the above materials were subjected to melt blending at a stirring rotation speed of 30 rpm for 1.5 h to obtain a poly(furan ethylene glycol dicarboxylate) composite. The poly(furan ethylene glycol dicarboxylate) composite has the shortest semi-crystallization time of 63s, a tensile strength of 88 MPa and a tensile modulus of 2.1 GPa.

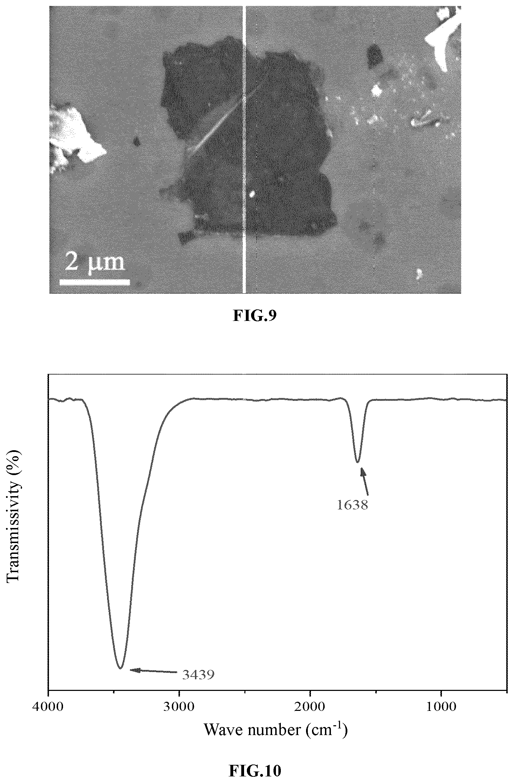

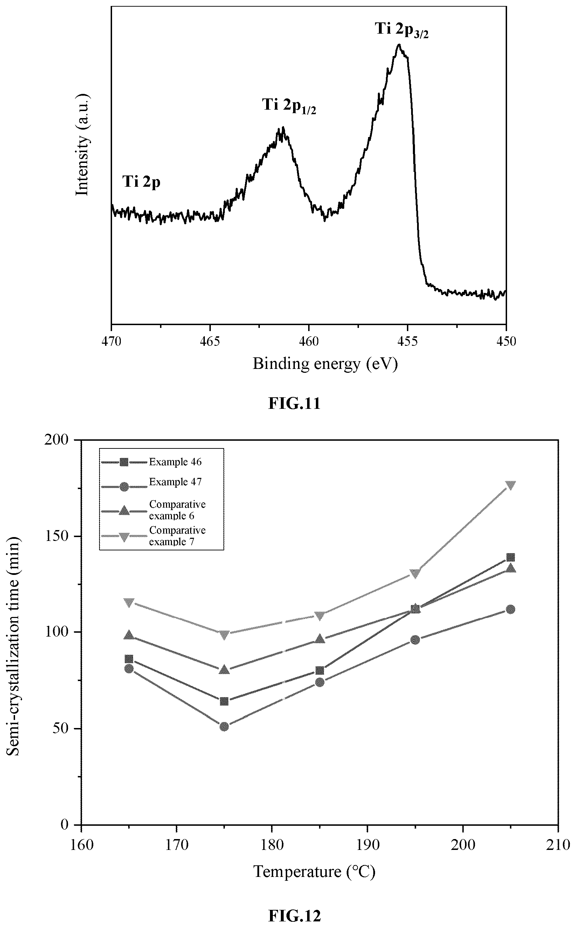

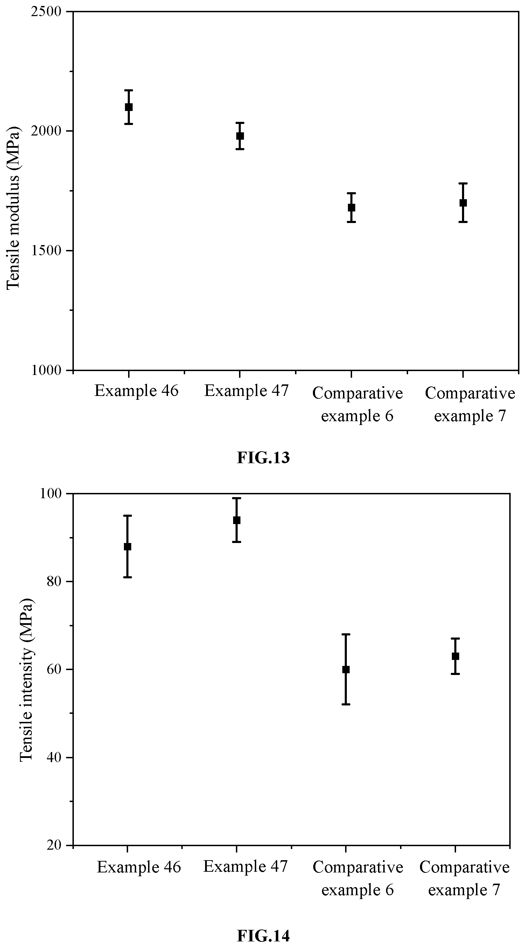

The inventor of this case analyzed the MXene powder used in this example. FIG.9 is an SEM of thisMXene, from which a laminated structure with a smooth surface can be observed, with a diameter of being approximately 2 µm. The infrared spectroscopy of this MXene is as shown in FIG.10, from which a hydroxyl characteristic peak at 3439 cm⁻¹ and the C=O vibration peak of carbonyl at 1638 cm-1can be clearly seen. In X-ray electron spectroscopy analysis, the two distinct peaks at 461.4 eV and 455.4 eV in the Ti 2p spectrum in FIG.11 correspond to Ti 2p_{1/2} and Ti 2p_{2/3}, respectively. The inventor of this case also conducted preliminary characterization of the properties of the obtained polyester composite. The semi-crystallization time broken line graph of FIG.12 shows that the polyester composite sample has shorter semi-crytsallization time, i.e., MXene quickens the crystallization rate of the polyester. Mechanical tests have shown that polyester composites have better mechanical properties compared to polyester without MXene (see FIG. 13 and FIG.14).

### Example 47

Poly(furan ethylene glycol dicarboxylate), Ti₂CTₓMXene, diphenyl phosphite and an antioxidant-168 were evenly mixed in a mass ratio of 1:0.2:0.002:0.004 for later use. The temperatures of a twin-screw extruder were set to 220°C in a first zone, 225°C in a second zone, 230°C in a third zone, 235°C in a fourth zone, 235°C in s fifth zone and 240°C in s sixth zone. After the temperature was reached, the prepared mixture was added into the feeding port of the twin-screw extruder and extruded at a screw rotation speed of 5 rpm to obtain a poly(butylene furandicarboxylate) composite. The poly(butylene furandicarboxylate) composite has the shortest semi-crystallization time of 51s, a tensile strength of 94 MPa and a tensile modulus of 2.0 GPa.

### Example 48

Poly(propylene furandicarboxylate), Ti₃(C,N)₂TₓMXene, ammonium phosphite and an antioxidant-1010 were evenly mixed in a mass ratio of 1:0.15:0.002:0.005 and added into a reactor, the reactor was slowly vacuumized to 10-200 Pa, the temperature was increased to 240°C, the above materials were subjected to melt blending at a stirring rotation speed of 30 rpm for 0.5 h to obtain a polypropylene furan dicarboxylate composite. The polypropylene furan dicarboxylate composite has the shortest semi-crystallization time of 46s, a tensile strength of 70 MPa and a tensile modulus of 1.9 GPa.

### Example 49

Poly(pentylene furandicarboxylate), poly(ethylene terephthalate), (Ti,V)₂CTₓMXene, triphenyl phosphate and an antioxidant-1010 were evenly mixed in a mass ratio of 0.05:0.95:0.25:0.003:0.002 for later use. The temperatures of a twin-screw extruder were set to 210°C in a first zone, 215°C in a second zone, 220°C in a third zone, 225°C in a fourth zone, 230°C in s fifth zone and 235°C in s sixth zone. After the temperature was reached, the prepared mixture was added into the feeding port of the twin-screw extruder and extruded at a screw rotation speed of 20 rpm to obtain a poly(pentylene furandicarboxylate) and poly(pentylene terephthalate) composite. The obtained poly(pentylene furandicarboxylate) and poly(pentylene terephthalate) composite has the shortest semi-crystallization time of 16s, a tensile strength of 60 MPa and a tensile modulus of 1.8 GPa.

### Example 50

Poly(hexylene furandicarboxylate), (Ti,Nb)₂CTₓMXene, trimethyl phosphate and an antioxidant-1076 were evenly mixed in a mass ratio of 1:0.3:0.002:0.001 for later use. The temperatures of a twin-screw extruder were set to 200°C in a first zone, 205°C in a second zone, 210°C in a third zone, 215°C in a fourth zone, 218°C in s fifth zone and 220°C in s sixth zone. After the temperature was reached, the prepared mixture was added into the feeding port of the twin-screw extruder and extruded at a screw rotation speed of 8 rpm to obtain a poly(hexylene furandicarboxylate) composite. The obtained poly(hexylene furandicarboxylate) composite has the shortest semi-crystallization time of 30 s, a tensile strength of 53 MPa and a tensile modulus of 1.6 GPa.

### Example 51

Poly(cyclohexanedimethanol furandicarboxylate), (Ti,V)₃C₂TₓMXene, ammonium dihydrogen phosphate and an antioxidant-1076 were evenly mixed in a mass ratio of 1:0.05:0.002:0.005 for later use. The temperatures of a twin-screw extruder were set to 260°C in a first zone, 265°C in a second zone, 270°C in a third zone, 275°C in a fourth zone, and 280°C in a fifth zone. After the temperature was reached, the prepared mixture was added into the feeding port of the single-screw extruder and extruded at a screw rotation speed of 10 rpm to obtain a poly(cyclohexanedimethanol furandicarboxylate) composite. The obtained poly(cyclohexanedimethanol furandicarboxylate) composite has the shortest semi-crystallization time of 11s, a tensile strength of 86 MPa and a tensile modulus of 2.2 GPa.

### Example 52

Poly(dicyclopentylene furandicarboxylate), Ti₃(C,N)₂TₓMXene, trimethyl phosphate and an antioxidant-168 were evenly mixed in a mass ratio of 1:0.01:0.003:0.002 for later use. The temperatures of a single-screw extruder were set to 230°C in a first zone, 235°C in a second zone, 240°C in a third zone, 245°C in a fourth zone and 250°C in a fifth zone. After the temperature was reached, the prepared mixture was added into the feeding port of the single-screw extruder and extruded at a screw rotation speed of 12 rpm to obtain a poly(dicyclopentylene furandicarboxylate) composite. The obtained poly(dicyclopentylene furandicarboxylate) composite has the shortest semi-crystallization time of 76s, a tensile strength of 81 MPa and a tensile modulus of 1.9 GPa.

### Example 53

Poly(ethylene terephthalate), (Mo₂Ti)C₂TₓMXene, triphenyl phosphate and an antioxidant-1010 were evenly mixed in a mass ratio of 1:0.05:0.003:0.002 for later use. The temperatures of a single-screw extruder were set to 260°C in a first zone, 265°C in a second zone, 270°C in a third zone, 275°C in a fourth zone and 280°C in a fifth zone. After the temperature was reached, the prepared mixture was added into the feeding port of the single-screw extruder. The above material was extruded at a screw rotation speed of 16 rpm to obtain a poly(ethylene terephthalate) composite. The obtained poly(ethylene terephthalate) composite has the shortest semi-crystallization time of 36s, a tensile strength of 76 MPa and a tensile modulus of 1.9 GPa.

### Example 54

Poly(propylene terephthalate), (Cr₂Ti)C₂TₓMXene, hypophosphorous acid and an antioxidant-168 were evenly mixed in a mass ratio of 1:0.1:0.002:0.003 for later use. The temperatures of a single-screw extruder were set to 250°C in a first zone, 260°C in a second zone, 260°C in a third zone, 265°C in a fourth zone and 270°C in a fifth zone. After the temperature was reached, the prepared mixture was added into the feeding port of the single-screw extruder, and extruded in the screw rotation speed of 18 rpm to obtain a poly(propylene terephthalate) composite. The obtained poly(propylene terephthalate) composite has the shortest semi-crystallization time of 31s, a tensile strength of 69 MPa and a tensile modulus of 1.8 GPa.

### Example 55

poly(butylene terephthalate), Ti₄N₃TₓMXene, diphenyl phosphate and an antioxidant-168 were evenly mixed in a mass ratio of 1:0.15:0.002:0.003 for later use. The temperatures of a single-screw extruder were set to 230°C in a first zone, 232°C in a second zone, 235°C in a third zone, 240°C in a fourth zone and 245°C in a fifth zone. After the temperature was reached, the prepared mixture was added into the feeding port of the single-screw extruder, and extruded in the screw rotation speed of 22 rpm to obtain a poly(butylene terephthalate) composite. The obtained poly(butylene terephthalate) composite has the shortest semi-crystallization time of 21s, a tensile strength of 64 MPa and a tensile modulus of 1.7 GPa.

### Example 56

Poly(pentylene furandicarboxylate), (Mo₂Ti₂)C₃TₓMXene, pyrophosphatic acid and an antioxidant-168 were evenly mixed in a mass ratio of 1:0.2:0.001:0.005 for later use. The temperatures of a single-screw extruder were set to 215°C in a first zone, 220°C in a second zone, 225°C in a third zone, 230°C in a fourth zone and 240°C in a fifth zone. After the temperature was reached, the prepared mixture was added into the feeding port of the single-screw extruder, and extruded in the screw rotation speed of 12 rpm to obtain a poly(pentylene furandicarboxylate) composite. The obtained poly(pentylene furandicarboxylate) composite has the shortest semi-crystallization time of 40s, a tensile strength of 68 MPa and a tensile modulus of 1.7 GPa.

### Example 57

Poly(cyclohexanedimethanol furandicarboxylate), polytrimethylene terephthalate, Ti₃C₂TₓMXene, triphenyl phosphate and antioxidant-168 were evenly mixed in a mass ratio of 0.05:0.95:0.15:0.0005:0.004 for later use. The temperatures of a single-screw extruder were set to 240°C in a first zone, 245°C in a second zone, 255°C in a third zone, 260°C in a fourth zone and 268°C in a fifth zone. After the temperature was reached, the prepared mixture was added into the feeding port of the single-screw extruder, and extruded in the screw rotation speed of 17 rpm to obtain a poly(cyclohexanedimethanol furandicarboxylate) and poly(ethylene terephthalate) composite. The obtained poly(cyclohexanedimethanol furandicarboxylate) and poly(ethylene terephthalate) composite has the shortest semi-crystallization time of 28s, a tensile strength of 74 MPa and a tensile modulus of 1.7 GPa.

### Example 58

Poly(ethylene furandicarboxylate), poly(butylene terephthalate), (Ti,Nb)₄C₃TₓMXene, triphenyl phosphite and an antioxidant-1076 were evenly mixed in a mass ratio of 0.05:0.95:0.1:0.002:0.002 for later use. The temperatures of a twin-screw extruder were set to 230°C in a first zone, 235°C in a second zone, 235°C in a third zone, 240°C in a fourth zone, 245°C in a fifth zone and 250°C in a sixth zone. After the temperature was reached, the prepared mixture was added into the feeding port of the twin-screw extruder, and extruded in the screw rotation speed of 22 rpm to obtain a poly(furan ethylene glycol dicarboxylate) and poly(butylene terephthalate) composite. The obtained poly(furan ethylene glycol dicarboxylate) and poly(butylene terephthalate) composite has the shortest semi-crystallization time of 18s, a tensile strength of 72 MPa and a tensile modulus of 1.8 GPa.

### Example 59

Poly(propylene furandicarboxylate), poly(ethylene furandicarboxylate), Ti₂CTₓMXene, ammonium phosphite and an antioxidant-1010 were evenly mixed in a molar ratio of 0.05:0.95:0.15:0.002:0.005 and added into a reactor, the reactor was vacuumized to 10-100 Pa, the temperature was increased to 250°C, the above materials were subjected to melt blending for 1.0 h at the stirring rotation speed of 30 rpm to obtain a poly(propylene furandicarboxylate) and poly(ethylene furandicarboxylate) composite. The obtained poly(propylene furandicarboxylate) and poly(ethylene furandicarboxylate) composite has the shortest semi-crystallization time of 54 s, a tensile strength of 77 MPa and a tensile modulus of 1.8 GPa.

### Example 60

Poly(ethylene terephthalate), Ti₃(C,N)₂TₓMXene, hypophosphorous acid and an antioxidant-168 were evenly mixed in a mass ratio of 1:0.2:0.001:0.005 for later use. The temperatures of a single-screw extruder were set to 215°C in a first zone, 220°C in a second zone, 225°C in a third zone, 235°C in a fourth zone and 240°C in a fifth zone. After the temperature was reached, the prepared mixture was added into the feeding port of the single-screw extruder, and extruded in the screw rotation speed of 24 rpm to obtain a poly(ethylene terephthalate) composite. The obtained poly(ethylene terephthalate) composite has the shortest semi-crystallization time of 17s, a tensile strength of 69 MPa and a tensile modulus of 1.7 GPa.

### Example 61

Poly(hexylene terephthalate), (Ti,V)₂CTₓMXene, triphenyl phosphate and an antioxidant-168 were evenly mixed in a mass ratio of 1:0.25:0.0005:0.004 for later use. The temperatures of a single-screw extruder were set to 230°C in a first zone, 240°C in a second zone, 245°C in a third zone, 245°C in a fourth zone and 250°C in a fifth zone. After the temperature was reached, the prepared mixture was added into the feeding port of the single-screw extruder, and extruded in the screw rotation speed of 32 rpm to obtain a poly(hexylene terephthalate) composite. The obtained poly(hexylene terephthalate) composite has the shortest semi-crystallization time of 12s, a tensile strength of 64 MPa and a tensile modulus of 1.6 GPa.

### Example 62

Poly(cyclohexane ethylene dicarboxylate), (Ti,Nb)₂CTₓMXene, diphenyl phosphate and an antioxidant-1076 were evenly mixed in a mass ratio of 1:0.3:0.002:0.002 for later use. The temperatures of a twin-screw extruder were set to 115°C in a first zone, 115°C in a second zone, 120°C in a third zone, 125°C in a fourth zone, 125°C in a fifth zone and 130°C in a sixth zone. After the temperature was reached, the prepared mixture was added into the feeding port of the twin-screw extruder, and extruded in the screw rotation speed of 32 rpm to obtain a poly(cyclohexane ethylene dicarboxylate) composite. The obtained poly(cyclohexane ethylene dicarboxylate) composite has the shortest semi-crystallization time of 197s, a tensile strength of 5 MPa and a tensile modulus of 0.08 GPa.

### Example 63

Poly(butylene succinate), (Ti,V)₃C₂TₓMXene, triphenyl phosphite and an antioxidant-1076 were evenly mixed in a mass ratio of 1:0.1:0.001:0.002 for later use. The temperatures of a twin-screw extruder were set to 125°C in a first zone, 125°C in a second zone, 130°C in a third zone, 130°C in a fourth zone, 135°C in a fifth zone and 140°C in a sixth zone. After the temperature was reached, the prepared mixture was added into the feeding port of the twin-screw extruder, and extruded in the screw rotation speed of 35 rpm to obtain a poly(butylene succinate) composite. The obtained poly(butylene succinate) composite has the shortest semi-crystallization time of 204s, a tensile strength of 27 MPa and a tensile modulus of 0.15 GPa.

### Example 64

Poly(ethylene adipate), Ti₃(C,N)₂TₓMXene, ammonium phosphite and antioxidant-1010 were evenly mixed in a mass ratio of 1:0.15:0.002:0.0005 and then added into a reactor, the reactor was slowly vacuumized to less than 10-100 Pa, the temperature was increased to 140°C, the above materials were subjected to melt blending at a stirring rotation speed of 28 rpm for 6.0 h to obtain a poly(ethylene adipate) composite. The obtained poly(ethylene adipate) composite has the shortest semi-crystallization time of 68s, a tensile strength of 11 MPa and a tensile modulus of 0.1 GPa.

### Example 65

Poly(ethylene naphthalate), (Mo₂Ti)C₂TₓMXene, diphenyl phosphite and an antioxidant-168 were evenly mixed in a mass ratio of 1:0.2:0.002:0.004 for later use. The temperatures of a twin-screw extruder were set to 270°C in a first zone, 275°C in a second zone, 280°C in a third zone, 285°C in a fourth zone, 290°C in a fifth zone and 295°C in a sixth zone. After the temperature was reached, the prepared mixture was added into the feeding port of the twin-screw extruder, and extruded in the screw rotation speed of 8 rpm to obtain a poly(ethylene naphthalate) composite. The obtained poly(ethylene naphthalate) composite has the shortest semi-crystallization time of 113s, a tensile strength of 98 MPa and a tensile modulus of 2.2 GPa.

### Example 66

Poly(biphenyl ethylene dicarboxylate), (Cr₂Ti)C₂TₓMXene, ammonium phosphite and antioxidant-1010 were evenly mixed in a mass ratio of 1:0.15:0.001:0.003 and then added into a reactor, the reactor was slowly vacuumized to less than 10-200 Pa, the temperature was increased to 290°C, the above materials were subjected to melt blending at a stirring rotation speed of 30 rpm for 0.5 h to obtain a poly(biphenyl ethylene dicarboxylate) composite. The obtained poly(biphenyl ethylene dicarboxylate) composite has the shortest semi-crystallization time of 186s, a tensile strength of 56 MPa and a tensile modulus of 2.2 GPa.

### Example 67

Poly(ethylene isophthalate), Ti₄N₃TₓMXene, diphenyl phosphate and an antioxidant-1010 were evenly mixed in a mass ratio of 1:0.25:0.003:0.002 for later use. The temperatures of a twin-screw extruder were set to 210°C in a first zone, 215°C in a second zone, 220°C in a third zone, 225°C in a fourth zone, 230°C in a fifth zone and 235°C in a sixth zone. After the temperature was reached, the prepared mixture was added into the feeding port of the twin-screw extruder, and extruded in the screw rotation speed of 28 rpm to obtain a poly(ethylene isophthalate) composite. The obtained poly(ethylene isophthalate) composite has the shortest semi-crystallization time of 156s, a tensile strength of 73 MPa and a tensile modulus of 1.8 GPa.

### Example 68

Poly(ethylene phthalate), (Mo₂Ti₂)C₃TₓMXene, trimethyl phosphate and an antioxidant-1076 were evenly mixed in a mass ratio of 1:0.3:0.002:0.001 for later use. The temperatures of a twin-screw extruder were set to 260°C in a first zone, 265°C in a second zone, 270°C in a third zone, 275°C in a fourth zone, 280°C in a fifth zone and 280°C in a sixth zone. After the temperature was reached, the prepared mixture was added into the feeding port of the twin-screw extruder, and extruded in the screw rotation speed of 8 rpm to obtain a poly(ethylene phthalate) composite. The obtained poly(ethylene isophthalate) composite has the shortest semi-crystallization time of 171s, a tensile strength of 67 MPa and a tensile modulus of 1.7 GPa.

### Example 69

Poly(terephthalate-ethylene furandicarboxylate), (Cr₂Ti)C₂TₓMXene, ammonium dihydrogen phosphate and an antioxidant-1076 were evenly mixed in a mass ratio of 1:0.05:0.001:0.002 for later use. The temperatures of a single-screw extruder were set to 240°C in a first zone, 245°C in a second zone, 250°C in a third zone, 255°C in a fourth zone and 260°C in a fifth zone. After the temperature was reached, the prepared mixture was added into the feeding port of the single-screw extruder, and extruded in the screw rotation speed of 12 rpm to obtain a poly(terephthalate-ethylene furandicarboxylate) composite. The obtained poly(terephthalate-ethylene furandicarboxylate) composite has the shortest semi-crystallization time of 104s, a tensile strength of 75 MPa and a tensile modulus of 1.8 GPa.

### Example 70

Poly(terephthalate-ethylene isophthalate), (Cr₂Ti)C₂TₓMXene, ammonium dihydrogen phosphate and an antioxidant-1010 were evenly mixed in a mass ratio of 1:0.05:0.002:0.004 for later use. The temperatures of a twin-screw extruder were set to 250°C in a first zone, 255°C in a second zone, 260°C in a third zone, 270°C in a fourth zone, 275°C in a fifth zone and 280°C in a sixth zone. After the temperature was reached, the prepared mixture was added into the feeding port of the twin-screw extruder, and extruded in the screw rotation speed of 8 rpm to obtain a poly(terephthalate-ethylene isophthalate) composite. The obtained poly(terephthalate-ethylene isophthalate) composite has the shortest semi-crystallization time of 56s, a tensile strength of 96 MPa and a tensile modulus of 2.0 GPa.

### Comparative example 6

Poly(ethylene furandicarboxylate), unetched Mₙ₊₁AXₙ, ammonium phosphite and an antioxidant-1010 were evenly mixed in a mass ratio of 1:0.15:0.002:0.005 and then added into a reactor, the reactor was slowly vacuumized to less than 10-100 Pa, the temperature was increased to 240°C, the above materials were subjected to melt blending at a stirring rotation speed of 35 rpm for 1.5 h to obtain a poly(ethylene furandicarboxylate) composite. The obtained poly(ethylene furandicarboxylate) composite has the shortest semi-crystallization time of 80s, a tensile strength of 60 MPa and a tensile modulus of 1.7 GPa.

### Comparative example 7

Poly(ethylene furandicarboxylate), titanium dioxide, triphenyl phosphite and an antioxidant-1076 were evenly mixed in a mass ratio of 1:0.01:0.001:0.002 for later use. The temperatures of a twin-screw extruder were set to 225°C in a first zone, 225°C in a second zone, 230°C in a third zone, 230°C in a fourth zone, 235°C in a fifth zone and 240°C in a sixth zone. After the temperature was reached, the prepared mixture was added into the feeding port of the twin-screw extruder, and extruded in the screw rotation speed of 35 rpm to obtain a poly(ethylene furandicarboxylate) composite. The obtained poly(ethylene furandicarboxylate) composite has the shortest semi-crystallization time of 97s, a tensile strength of 63 MPa and a tensile modulus of 1.7 GPa.

### Comparative example 8

Poly(ethylene furandicarboxylate), poly(ethylene terephthalate), triphenyl phosphate and an antioxidant-1010 were evenly mixed in a mass ratio of 0.99:0.01:0.001:0.002 and then added into a reactor, the reactor was slowly vacuumized to less than 10-100 Pa, the temperature was increased to 250°C, the above materials were subjected to melt blending at a stirring rotation speed of 32 rpm for 1.8 h to obtain a poly(ethylene furandicarboxylate) and poly(ethylene terephthalate) blend. The obtained poly(ethylene furandicarboxylate) and poly(ethylene terephthalate) blend has the shortest semi-crystallization time of 76s, a tensile strength of 58 MPa and a tensile modulus of 1.6 GPa.

**Example 71** A preparation method of a molded plastic product comprises:
A poly(ethylene furandicarboxylate) composite and 20wt% glass fiber were added into a mould, and subjected to mould pressing and formation at a temperature of 250°C under a pressure of 3 MPa and demoulding at 235°C. Subsequently, burrs were polished to obtain a glass fiber reinforced poly(ethylene furandicarboxylate) composite product.

In addition, the inventor of this case conducted tests with reference to the above-mentioned examples and other raw materials, process operations and process conditions set forth in the specification, and obtained ideal conclusions.

## Claims

1. A preparation method of a polyester material, consisting of: reacting a dibasic acid and/or a dibasic acid ester, diol, a two-dimensional MXene material catalyst, a second catalyst and a stabilizer to prepare the polyester material; or, performing melt blending on a polyester, a two-dimensional MXene material and an additive to prepare the polyester material, wherein a chemical formula of the two-dimensional MXene material is Mₙ₊₁XₙTₓ, M is titanium and/or a combination of titanium and at least one of Sc, Y, Zr, Hf, V, Nb, Ta, Cr, Mo and W, X is carbon and/or nitrogen, n is any integral of 1-4, and Tₓ is -O, OH or -F.

2. The preparation method according to claim 1, wherein the order of the steps is:
reacting a dibasic acid and/or a dibasic acid ester, a second dibasic acid and/or a second dibasic acid ester which is selectively added or not added, diol, a two-dimensional MXene material as a first catalyst and a second catalyst to obtain a first intermediate product; and
then reacting the first intermediate product with a stabilizer to obtain the polyester material;
or, reacting a dibasic acid and/or a dibasic acid ester, a second dibasic acid and/or a second dibasic acid ester which is selectively added or not added, diol and a second catalyst to obtain a second intermediate product; and
then reacting the second intermediate product, the two-dimensional MXene material as the first catalyst and the stabilizer to obtain the polyester material.

3. The preparation method according to claim 1, wherein the two-dimensional MXene material is obtained by etching Mₙ₊₁AXₙ to remove A atoms, M is titanium and/or a combination of titanium and at least one of Sc, Y, Zr, Hf, V, Nb, Ta, Cr, Mo and W, A is Al, Si or Ga, X is carbon and/or nitrogen, and n is any integral of 1-4;
and/or, the diol comprises any one or a combination of more than two of ethylene glycol, propylene glycol, butylene glycol, pentanediol, hexylene glycole, neopentyl glycol, 1,4-cyclohexanedimethanol, 1,4-cyclohexanediol and dicyclopentanediol;
and/or, the second catalyst is an esterification or ester exchange catalyst, comprising any one or a combination of more than two of a zinc catalyst, a manganese catalyst, a titanium catalyst, an antimony catalyst, a tin catalyst and a germanium catalyst; the manganese catalyst comprises manganese acetate, the titanium catalyst comprises any one or a combination of more than two of tetrabutyl titanate, isopropyl titanate, titanium dioxide and inorganic titanium-supported catalysts, the antimony catalyst comprises any one or a combination of more than two of antimony trioxide, ethylene glycol antimony, antimony acetate and polyethylene glycol antimony, the tin catalyst comprises any one or a combination of more than two of dibutyl tin oxide, stannous iso caprylate, monobutyl tin triisooctanoate and dioctyl tin oxide, and the germanium catalyst comprises germanium dioxide and/or germanium oxide;
and/or, the stabilizer comprises any one or a combination of more than two of phosphorous acid, hypophosphorous acid, pyrophosphoric acid, ammonium phosphate, trimethyl phosphate, dimethyl phosphate, triphenyl phosphate, diphenyl phosphate, triphenyl phosphite, diphenyl phosphite, ammonium phosphite and ammonium dihydrogen phosphate.

4. The preparation method according to claim 2, wherein the dibasic acid and/or the dibasic acid ester comprises any one or a combination of more than two of terephthalic acid, isophthalic acid, phthalic acid, biphenyldicarboxylic acid, naphthalic acid, cyclohexanedicarboxylic acid, succinic acid, adipic acid, dimethyl terephthalate, dimethyl isophthalate, dimethyl phthalate, biphenyl dimethyl dicarboxylate, dimethyl naphthalate, dimethyl cyclohexanedicarboxylate, dimethyl succinate and dimethyl adipate;
and/or, a molar ratio of the diol to the dibasic acid and/or the dibasic acid ester is 120-300:100; and/or, a molar ratio of the two-dimensional MXene material to the dibasic acid and/or the dibasic acid ester is 0.01-3.0: 100; and/or, a molar ratio of the second catalyst to the dibasic acid and/or the dibasic acid ester is 0-3.0:1000; and/or, a molar ratio of the stabilizer to the dibasic acid and/or the dibasic acid ester is 0.04-0.5: 1000.

5. The preparation method according to claim 2, wherein the dibasic acid comprises any one or a combination of more than two of 2,5-furandicarboxylic acid, 2,4-furandicarboxylic acid, 2,3-furandicarboxylic acid and 3,4-furandicarboxylic acid; and/or, the second dibasic acid comprises any one or a combination of more than two of terephthalic acid, isophthalic acid, phthalic acid and cyclohexanedicarboxylic acid;
and/or, a molar ratio of the dibasic acid and/or the dibasic acid ester to the second dibasic acid and/or the second dibasic acid ester is 100:1-10000;
and/or, a molar ratio of a combination of the dibasic acid and/or the dibasic acid ester and the second dibasic acid and/or the second dibasic acid ester to diol is 100:110-350; and/or, a molar ratio of a combination of the dibasic acid and/or the dibasic acid ester and the second dibasic acid and/or the second dibasic acid ester to the two-dimensional MXene material is 100:0.005-3.5; and/or, a molar ratio of a combination of the dibasic acid and/or the dibasic acid ester and the second dibasic acid and/or the second dibasic acid ester to the second catalyst is 1000:0-5; and/or a molar ratio of a combination of the dibasic acid and/or the dibasic acid ester and the second dibasic acid and/or the second dibasic acid ester to the stabilizer is 1000:0.02-0.55.

6. The preparation method according to claim 1, wherein the performing melt blending on the polyester, the two-dimensional MXene material and an additive is performed at a temperature of 115°C-295°C to obtain a quickly crystallized polyester composite;
and/or, the two-dimensional MXene material is obtained by etching Mₙ₊₁AXₙ to remove A atoms, M is an early transition metal element, A is Al, Si, or Ga, X is carbon and/or nitrogen, and n is any integer of 1-4;
and/or, a mass ratio of the two-dimensional MXene material to the polyester is 0.1-30:100; and/or, the polyester comprises any one or a combination of more than two of poly(ethylene furandicarboxylate), poly(propylene furandicarboxylate), poly(butylene furandicarboxylate), poly(pentylene furandicarboxylate), poly(hexylene furandicarboxylate), poly(cyclohexanedimethanol furandicarboxylate), poly(dicyclopentylene furandicarboxylate), poly(ethylene terephthalate), poly(propylene terephthalate), poly(butylene terephthalate), poly(pentylene terephthalate), poly(hexylene terephthalate), poly(cyclohexane ethylene dicarboxylate), poly(butylene succinate), poly(ethylene adipate), poly(ethylene naphthalate), poly(biphenyl ethylene dicarboxylate), poly(ethylene isophthalate), poly(ethylene phthalate), poly(terephthalate-ethylene furandicarboxylate) and poly(terephthalate-ethylene isophthalate);
and/or, the additive comprises at least one of an antioxidant and a stabilizer, the stabilizer comprises at least one of phosphoric acid, phosphorous acid, hypophosphorous acid, pyrophosphoric acid, ammonium phosphate, trimethyl phosphate, dimethyl phosphate, triphenyl phosphate, diphenyl phosphate, triphenyl phosphite, diphenyl phosphite, ammonium phosphite and ammonium dihydrogen phosphate, and the antioxidant comprises at least one of an antioxidant -1010, an antioxidant-1076 and an antioxidant-168;
preferably, a mass ratio of the stabilizer to the polyester is 0.05-0.3:100; and/or, a mass ratio of the antioxidant to the polyester is 0.05-0.5:100;
and/or, the melt blending comprises at least one of extruder melt blending and reactor melt blending; wherein the reactor melt blending is carried out under a vacuum condition of 3-200 Pa, the time for reactor melt blending is 0.5-6 hours, the extruder melt blending comprises single-screw extrusion melt blending or twin-screw extrusion melt blending, a temperature for extruder melt blending is 115°C-295°C, and a screw rotation speed is 5 rpm-35 rpm.

7. Use of the polyester material prepared by the preparation method according to any one of claims 1-6 in preparing engineering plastics, optical films, industrial silk or food packaging materials.

8. A processing method of a polyester film, comprising:
feeding the polyester material prepared by the preparation method according to any one of claims 1-6 into a single-screw extruder for melt extrusion, and allowing a molten fluid to cast onto a rotary cooling roller to obtain a casting thick sheet; and
preheating, longitudinally stretching, preheating again and transversely stretching the casting thick sheet in sequence, and then performing thermal setting to obtain the polyester film.

9. A processing method of a molded plastic product, comprising: mixing the polyester material prepared by the preparation method according to any one of claims 1-6 with an enhancement material, then processing the above mixture into a shape of a required product at least through any one of mould pressing, lamination, transfer molding and casting, and then curing to obtain the required product.

10. A multi-layer composite film structure, comprising a plurality of laminated structure layers which are made of film-shaped materials or flaky materials, wherein at least one structure layer is a film formed by the polyester material prepared by the preparation method according to any one of claims 1-6, or wherein at least two adjacent structure layers are fixedly connected through the polyester material prepared by the preparation method according to any one of claims 1-6.

## Patentansprüche

1. Ein Herstellungsverfahren für ein Polyestermaterial, bestehend aus: Reagieren einer Dicarbonsäure und/oder eines Dicarbonsäureesters, eines Diols, eines zweidimensionalen MXen-Materials als Katalysator, eines zweiten Katalysators und eines Stabilisators zur Herstellung des Polyestermaterials; oder Durchführen eines Schmelzmischens eines Polyesters, eines zweidimensionalen MXen-Materials und eines Additivs zur Herstellung des Polyestermaterials, wobei eine chemische Formel des zweidimensionalen MXen-Materials Mₙ₊₁XₙTₓ ist, wobei M Titan und/oder eine Kombination aus Titan und mindestens einem von Sc, Y, Zr, Hf, V, Nb, Ta, Cr, Mo und W ist, X Kohlenstoff und/oder Stickstoff ist, n eine beliebige ganze Zahl von 1-4 ist und Tₓ -O, -OH oder -F ist.

2. Herstellungsverfahren nach Anspruch 1, wobei die Reihenfolge der Schritte ist:
Reagieren einer Dicarbonsäure und/oder eines Dicarbonsäureesters, einer zweiten Dicarbonsäure und/oder eines zweiten Dicarbonsäureesters, der wahlweise zugesetzt wird oder nicht, eines Diols, eines zweidimensionalen MXen-Materials als erstem Katalysator und eines zweiten Katalysators zur Erzeugung eines ersten Zwischenprodukts; und
anschließend Reagieren des ersten Zwischenprodukts mit einem Stabilisator zur Erzeugung des Polyestermaterials;
oder Reagieren einer Dicarbonsäure und/oder eines Dicarbonsäureesters, einer zweiten Dicarbonsäure und/oder eines zweiten Dicarbonsäureesters, der wahlweise zugesetzt wird oder nicht, eines Diols und eines zweiten Katalysators zur Erzeugung eines zweiten Zwischenprodukts; und
anschließend Reagieren des zweiten Zwischenprodukts, des zweidimensionalen MXen-Materials als erstem Katalysator und des Stabilisators zur Erzeugung des Polyestermaterials.

3. Das Herstellungsverfahren nach Anspruch 1, wobei das zweidimensionale MXen-Material durch Ätzen von Mₙ₊₁AXₙ zur Entfernung von A-Atomen erhalten wird, wobei M Titan und/oder eine Kombination aus Titan und mindestens einem von Sc, Y, Zr, Hf, V, Nb, Ta, Cr, Mo und W ist, A Al, Si oder Ga ist, X Kohlenstoff und/oder Stickstoff ist und n eine beliebige ganze Zahl von 1-4 ist;
und/oder das Diol eine beliebige Verbindung oder eine Kombination von zwei oder mehr von Ethylenglykol, Propylenglykol, Butylenglykol, Pentandiol, Hexylenglykol, Neopentylglykol, 1,4-Cyclohexandimethanol, 1,4-Cyclohexandiol und Dicyclopentandiol umfasst;
und/oder der zweite Katalysator ein Veresterungs- oder Umesterungskatalysator ist, umfassend eine beliebige Verbindung oder eine Kombination von zwei oder mehr von einem Zinkkatalysator, einem Mangankatalysator, einem Titankatalysator, einem Antimonkatalysator, einem Zinnkatalysator und einem Germaniumkatalysator; der Mangankatalysator umfasst Manganacetat, der Titankatalysator umfasst eine beliebige Verbindung oder eine Kombination von zwei oder mehr von Tetrabutyl-titanat, Isopropyltitanat, Titandioxid und anorganischen titangetragenen Katalysatoren, der Antimonkatalysator umfasst eine beliebige Verbindung oder eine Kombination von zwei oder mehr von Antimontrioxid, Antimon-Ethylenglykol, Antimonacetat und Antimon-Polyethylenglykol, der Zinnkatalysator umfasst eine beliebige Verbindung oder eine Kombination von zwei oder mehr von Dibutylzinnoxid, Zinn(II)-Isocaprylat, Monobutylzinn-Triisooctanoat und Dioctylzinnoxid, und der Germaniumkatalysator umfasst Germaniumdioxid und/oder Germaniumoxid;
und/oder der Stabilisator eine beliebige Verbindung oder eine Kombination von zwei oder mehr von Phosphoriger Säure, Hypophosphoriger Säure, Pyrophosphorsäure, Ammoniumphosphat, Trimethylphosphat, Dimethylphosphat, Triphenylphosphat, Diphenylphosphat, Triphenylphosphit, Diphenylphosphit, Ammoniumphosphit und Ammoniumdihydrogenphosphat umfasst.

4. Herstellungsverfahren nach Anspruch 2, wobei die Dicarbonsäure und/oder der Dicarbonsäureester eine beliebige Verbindung oder eine Kombination von zwei oder mehr von Terephthalsäure, Isophthalsäure, Phthalsäure, Biphenyldicarbonsäure, Naphthalindicarbonsäure, Cyclohexandicarbonsäure, Bernsteinsäure, Adipinsäure, Dimethylterephthalat, Dimethylisophthalat, Dimethylphthalat, Biphenyl-Dimethyldicarboxylat, Dimethylnaphthalat, Dimethylcyclohexandicarboxylat, Dimethylsuccinat und Dimethyladipat umfasst;
und/oder ein molares Verhältnis des Diols zur Dicarbonsäure und/oder zum Dicarbonsäureester 120-300:100 ist; und/oder ein molares Verhältnis des zweidimensionalen MXen-Materials zur Dicarbonsäure und/oder zum Dicarbonsäureester 0,01-3,0:100 ist; und/oder ein molares Verhältnis des zweiten Katalysators zur Dicarbonsäure und/oder zum Dicarbonsäureester 0-3,0:1000 ist; und/oder ein molares Verhältnis des Stabilisators zur Dicarbonsäure und/oder zum Dicarbonsäureester 0,04-0,5:1000 ist.

5. Herstellungsverfahren nach Anspruch 2, wobei die Dicarbonsäure eine beliebige Verbindung oder eine Kombination von zwei oder mehr von 2,5-Furandicarbonsäure, 2,4-Furandicarbonsäure, 2,3-Furandicarbonsäure und 3,4-Furandicarbonsäure umfasst; und/oder die zweite Dicarbonsäure eine beliebige Verbindung oder eine Kombination von zwei oder mehr von Terephthalsäure, Isophthalsäure, Phthalsäure und Cyclohexandicarbonsäure umfasst;
und/oder ein molares Verhältnis der Dicarbonsäure und/oder des Dicarbonsäureesters zur zweiten Dicarbonsäure und/oder zum zweiten Dicarbonsäureester 100:1-10000 ist;
und/oder ein molares Verhältnis einer Kombination aus der Dicarbonsäure und/oder dem Dicarbonsäureester und der zweiten Dicarbonsäure und/oder dem zweiten Dicarbonsäureester zum Diol 100:110-350 ist; und/oder ein molares Verhältnis einer Kombination aus der Dicarbonsäure und/oder dem Dicarbonsäureester und der zweiten Dicarbonsäure und/oder dem zweiten Dicarbonsäureester zum zweidimensionalen MXen-Material 100:0,005-3,5 ist; und/oder ein molares Verhältnis einer Kombination aus der Dicarbonsäure und/oder dem Dicarbonsäureester und der zweiten Dicarbonsäure und/oder dem zweiten Dicarbonsäureester zum zweiten Katalysator 1000:0-5 ist; und/oder ein molares Verhältnis einer Kombination aus der Dicarbonsäure und/oder dem Dicarbonsäureester und der zweiten Dicarbonsäure und/oder dem zweiten Dicarbonsäureester zum Stabilisator 1000:0,02-0,55 ist.

6. Herstellungsverfahren nach Anspruch 1, wobei das Durchführen des Schmelzmischens des Polyesters, des zweidimensionalen MXen-Materials und eines Additivs bei einer Temperatur von 115 °C-295 °C durchgeführt wird, um einen schnell kristallisierenden Polyesterverbund zu erhalten;
und/oder das zweidimensionale MXen-Material durch Ätzen von Mₙ₊₁AXₙ zur Entfernung von A-Atomen erhalten wird, M ein frühes Übergangsmetallelement ist, A Al, Si oder Ga ist, X Kohlenstoff und/oder Stickstoff ist und n eine beliebige ganze Zahl von 1-4 ist;
und/oder ein Massenverhältnis des zweidimensionalen MXen-Materials zum Polyester 0,1-30: 100 ist; und/oder der Polyester eine beliebige Verbindung oder eine Kombination von zwei oder mehr von Poly(ethylenfurandicarboxylat), Poly(propylenfurandicarboxylat), Poly(butylenfurandicarboxylat), Poly(pentylenfurandicarboxylat), Poly(hexyl-enfurandicarboxylat), Poly(cyclohexandimethanofurandicarboxylat), Poly(dicyclopentylen-furandicarboxylat), Poly(ethylenterephthalat), Poly(propylenterephthalat), Poly(butylenterephthalat), Poly(pentylenterephthalat), Poly(hexylenterephthalat), Poly(cyclohexan-ethylendicarboxylat), Poly(butylensuccinat), Poly(ethylenadipat), Poly(ethylen-naphthalat), Poly(biphenyl-ethylendicarboxylat), Poly(ethylenisophthalat), Poly(ethylenphthalat), Poly(terephthalatethylenfurandicarboxylat) und Poly(terephthalat-ethylenisophthalat) umfasst;
und/oder das Additiv mindestens eines von einem Antioxidans und einem Stabilisator umfasst, wobei der Stabilisator mindestens eines von Phosphorsäure, Phosphoriger Säure, Hypophosphoriger Säure, Pyrophosphorsäure, Ammoniumphosphat, Trimethylphosphat, Dimethylphosphat, Triphenylphosphat, Diphenylphosphat, Triphenylphosphit, Diphenylphosphit, Ammoniumphosphit und Ammoniumdihydrogenphosphat umfasst und das Antioxidans mindestens eines von Antioxidans-1010, Antioxidans-1076 und Antioxidans-168 umfasst;
vorzugsweise ist ein Massenverhältnis des Stabilisators zum Polyester 0,05-0,3:100; und/oder ein Massenverhältnis des Antioxidans zum Polyester 0,05-0,5:100;
und/oder das Schmelzmischen mindestens eines von Extruder-Schmelzmischen und Reaktor-Schmelzmischen umfasst; wobei das Reaktor-Schmelzmischen unter einer Vakuumbedingung von 3-200 Pa durchgeführt wird, die Zeit für das Reaktor-Schmelzmischen 0,5-6 Stunden beträgt, das Extruder-Schmelzmischen Einzelschneckenextrusions-Schmelzmischen oder Doppelschneckenextrusions-Schmelzmischen umfasst, eine Temperatur für das Extruder-Schmelzmischen 115 °C-295 °C beträgt und eine Schneckendrehzahl 5-35 U/min beträgt.

7. Verwendung des durch das Herstellungsverfahren nach einem der Ansprüche 1-6 hergestellten Polyestermaterials zur Herstellung von technischen Kunststoffen, optischen Folien, Industriefasern oder Lebensmittelverpackungsmaterialien.

8. Ein Verarbeitungsverfahren einer Polyesterfolie, umfassend:
Einführen des durch das Herstellungsverfahren nach einem der Ansprüche 1-6 hergestellten Polyestermaterials in einen Einzelschneckenextruder zur Schmelzextrusion und Gießen der Schmelze auf eine rotierende Kühlwalze, um eine Gießdickplatte zu erhalten; und
Vorwärmen, Längsstrecken, erneutes Vorwärmen und Querstrecken der Gießdickplatte in dieser Reihenfolge und anschließend Durchführen einer Wärmefixierung, um die Polyesterfolie zu erhalten.

9. Verarbeitungsverfahren eines geformten Kunststoffprodukts, umfassend: Mischen des durch das Herstellungsverfahren nach einem der Ansprüche 1-6 hergestellten Polyestermaterials mit einem Verstärkungsmaterial, anschließend Verarbeiten der obigen Mischung in die Form eines gewünschten Produkts zumindest durch Formpressen, Laminieren, Transferformen oder Gießen, und anschließend Aushärten, um das gewünschte Produkt zu erhalten.

10. Eine Mehrschicht-Verbundfolienstruktur, umfassend mehrere laminierte Strukturschichten, die aus folienförmigen Materialien oder blattförmigen Materialien hergestellt sind, wobei mindestens eine Strukturschicht eine durch das Herstellungsverfahren nach einem der Ansprüche 1-6 hergestellte Polyesterfolie ist, oder wobei mindestens zwei benachbarte Strukturschichten durch, das durch das Herstellungsverfahren nach einem der Ansprüche 1-6 hergestellte Polyestermaterial fest miteinander verbunden sind.

## Revendications

1. Procédé de préparation d'un matériau polyester, comprenant : la réaction d'un acide dibasique et/ou d'un ester d'acide dibasique, d'un diol, d'un catalyseur à matériau MXène bidimensionnel, d'un deuxième catalyseur et d'un stabilisant pour préparer le matériau polyester ; ou, la réalisation d'un mélange à l'état fondu sur un polyester, un matériau MXène bidimensionnel et un additif pour préparer le matériau polyester, dans lequel une formule chimique du matériau MXène bidimensionnel est Mₙ₊₁XₙTₓ, M est le titane et/ou une combinaison de titane et d'au moins l'un parmi Sc, Y, Zr, Hf, V, Nb, Ta, Cr, Mo et W, X est le carbone et/ou l'azote, n est un entier quelconque de 1-4, et Tₓ est -O, OH ou -F.

2. Procédé de préparation selon la revendication 1, dans lequel l'ordre des étapes est comme suit :
la réaction d'un acide dibasique et/ou d'un ester d'acide dibasique, d'un deuxième acide dibasique et/ou d'un deuxième ester d'acide dibasique qui est ajouté, ou pas, de manière sélective, de diol, d'un matériau MXène bidimensionnel en tant que premier catalyseur et d'un deuxième catalyseur pour obtenir un premier produit intermédiaire ; et
puis la réaction du premier produit intermédiaire avec un stabilisant pour obtenir le matériau polyester ;
ou, la réaction d'un acide dibasique et/ou d'un ester d'acide dibasique, d'un deuxième acide dibasique et/ou d'un deuxième ester d'acide dibasique qui est ajouté, ou pas, de manière sélective, de diol et d'un deuxième catalyseur pour obtenir un deuxième produit intermédiaire ; et
puis la réaction du deuxième produit intermédiaire, du matériau MXène bidimensionnel en tant que premier catalyseur et du stabilisant pour obtenir le matériau polyester.

3. Procédé de préparation selon la revendication 1, dans lequel le matériau MXène bidimensionnel est obtenu par gravure de Mₙ₊₁AXₙ pour retirer des atomes A, M est le titane et/ou une combinaison de titane et d'au moins l'un parmi Sc, Y, Zr, Hf, V, Nb, Ta, Cr, Mo et W, A est Al, Si ou Ga, X est le carbone et/ou l'azote, et n est un entier quelconque de 1-4 ;
et/ou le diol comprend l'un quelconque ou une combinaison de plus de deux éléments parmi l'éthylène glycol, le propylène glycol, le butylène glycol, le pentanediol, l'hexylène glycol, le néopentyl glycol, le 1,4-cyclohexanediméthanol, le 1,4-cyclohexanediol et le dicyclopentanediol ;
et/ou, le deuxième catalyseur est un catalyseur d'estérification ou d'échange d'ester, comprenant l'un quelconque ou une combinaison de plus de deux parmi un catalyseur au zinc, un catalyseur au manganèse, un catalyseur au titane, un catalyseur à l'antimoine, un catalyseur à l'étain et un catalyseur au germanium ; le catalyseur au manganèse comprend de l'acétate de manganèse, le catalyseur au titane comprend l'un quelconque ou une combinaison de plus de deux parmi le titanate de tétrabutyle, le titanate d'isopropyle, le dioxyde de titane et les catalyseurs supportés par du titane inorganique, le catalyseur à d'antimoine comprend l'un quelconque ou une combinaison de plus de deux parmi le trioxyde d'antimoine, l'antimoine d'éthylène glycol, l'acétate d'antimoine et l'antimoine de polyéthylène glycol, le catalyseur à l'étain comprend l'un quelconque ou une combinaison de plus de deux parmi l'oxyde d'étain de dibutyle, l'iso caprylate stanneux, le triisooctanoate d'étain de monobutyle et l'oxyde d'étain de dioctyle, et le catalyseur de germanium comprend du dioxyde de germanium et/ou de l'oxyde de germanium ;
et/ou, le stabilisant comprend l'un quelconque ou une combinaison de plus de deux éléments parmi l'acide phosphoreux, l'acide hypophosphoreux, l'acide pyrophosphorique, le phosphate d'ammonium, le phosphate de triméthyle, le phosphate de diméthyle, le phosphate de triphényle, le phosphate de diphényle, le phosphite de triphényle, le phosphite de diphényle, le phosphite d'ammonium et le dihydrogénophosphate d'ammonium.

4. Procédé de préparation selon la revendication 2, dans lequel l'acide dibasique et/ou l'ester d'acide dibasique comprend l'un quelconque ou une combinaison de plus de deux parmi l'acide téréphtalique, l'acide isophtalique, l'acide phtalique, l'acide biphényldicarboxylique, l'acide naphtalique, l'acide cyclohexanedicarboxylique, l'acide succinique, l'acide adipique, le téréphtalate de diméthyle, l'isophtalate de diméthyle, le phtalate de diméthyle, le dicarboxylate de biphényle diméthyle, le naphtalate de diméthyle, le cyclohexanedicarboxylate de diméthyle, le succinate de diméthyle et l'adipate de diméthyle ;
et/ou, un rapport molaire du diol à l'acide dibasique et/ou à l'ester d'acide dibasique est de 120-300:100 ; et/ou, un rapport molaire du matériau MXène bidimensionnel à l'acide dibasique et/ou à l'ester d'acide dibasique est de 0,01-3,0:100 ; et/ou, un rapport molaire du deuxième catalyseur à l'acide dibasique et/ou à l'ester d'acide dibasique est de 0-3,0:1000 ; et/ou, un rapport molaire du stabilisant à l'acide dibasique et/ou à l'ester d'acide dibasique est de 0,04-0,5:1000.

5. Procédé de préparation selon la revendication 2, dans lequel l'acide dibasique comprend l'un quelconque ou une combinaison de plus de deux parmi l'acide 2,5-furandicarboxylique, l'acide 2,4-furandicarboxylique, l'acide 2,3-furandicarboxylique et l'acide 3,4-furandicarboxylique ; et/ou, le deuxième acide dibasique comprend l'un quelconque ou une combinaison de plus de deux parmi l'acide téréphtalique, l'acide isophtalique, l'acide phtalique et l'acide cyclohexanedicarboxylique ;
et/ou, un rapport molaire de l'acide dibasique et/ou de l'ester d'acide dibasique au deuxième acide dibasique et/ou au deuxième ester d'acide dibasique est de 100:1-10000 ;
et/ou, un rapport molaire d'une combinaison de l'acide dibasique et/ou de l'ester d'acide dibasique et du deuxième acide dibasique et/ou du deuxième ester d'acide dibasique au diol est de 100:110-350 ; et/ou, un rapport molaire d'une combinaison de l'acide dibasique et/ou de l'ester d'acide dibasique et du deuxième acide dibasique et/ou du deuxième ester d'acide dibasique au matériau MXène bidimensionnel est de 100:0,005-3,5 ; et/ou, un rapport molaire d'une combinaison de l'acide dibasique et/ou de l'ester d'acide dibasique et du deuxième acide dibasique et/ou du deuxième ester d'acide dibasique au deuxième catalyseur est de 1000:0-5 ; et/ou un rapport molaire d'une combinaison de l'acide dibasique et/ou de l'ester d'acide dibasique et du deuxième acide dibasique et/ou du deuxième ester d'acide dibasique au stabilisant est de 1000:0,02-0,55.

6. Procédé de préparation selon la revendication 1, dans lequel la réalisation d'un mélange à l'état fondu sur le polyester, le matériau MXène bidimensionnel et un additif est faite à une température de 115°C-295°C pour obtenir un composite polyester rapidement cristallisé ;
et/ou, le matériau MXène bidimensionnel est obtenu par gravure de Mₙ₊₁AXₙ pour retirer des atomes A, M est un élément métal de transition antérieur, A est Al, Si, ou Ga, X est du carbone et/ou de l'azote, et n est un nombre entier quelconque de 1-4 ;
et/ou, un rapport massique du matériau MXène bidimensionnel au polyester est de 0,1-30:100 ; et/ou, le polyester comprend l'un quelconque ou une combinaison de plus de deux parmi le poly(furandicarboxylate d'éthylène), le poly(furandicarboxylate de propylène), le poly(furandicarboxylate de butylène), le poly(furandicarboxylate de pentylène), le poly(furandicarboxylate d'hexylène), le poly(furandicarboxylate de cyclohexanediméthanol), le poly(furandicarboxylate de dicyclopentylène), le poly(téréphtalate d'éthylène), le poly(téréphtalate de propylène), le poly(téréphtalate de butylène), le poly(téréphtalate de pentylène), le poly(téréphtalate d'hexylène), le poly(dicarboxylate d'éthylène cyclohexane), le poly(succinate de butylène), le poly(adipate d'éthylène), le poly(naphtalate d'éthylène), le poly(dicarboxylate d'éthylène biphényle), le poly(isophtalate d'éthylène), le poly(phtalate d'éthylène), le poly(furandicarboxylate de téréphtalate d'éthylène) et le poly(isophthalate de téréphtalate d'éthylène) ;
et/ou, l'additif comprend au moins l'un parmi un antioxydant et un stabilisant, le stabilisant comprend au moins l'un parmi l'acide phosphorique, l'acide phosphoreux, l'acide hypophosphoreux, l'acide pyrophosphorique, le phosphate d'ammonium, le phosphate de triméthyle, le phosphate de diméthyle, le phosphate de triphényle, le phosphate de diphényle, le phosphite de triphényle, le phosphite de diphényle, le phosphite d'ammonium et le dihydrogénophosphate d'ammonium, et l'antioxydant comprend au moins l'un parmi un antioxydant-1010, un antioxydant-1076 et un antioxydant-168 ;
de préférence, un rapport massique du stabilisant au polyester est de 0,05-0,3:100 ; et/ou, un rapport massique de l'antioxydant au polyester est de 0,05-0,5:100 ;
et/ou le mélange à l'état fondu comprend au moins l'un parmi le mélange à l'état fondu d'extrudeuse et le mélange à l'état fondu de réacteur ; dans lequel le mélange à l'état fondu de réacteur est réalisé dans un état de vide de 3-200 Pa, le temps pour le mélange à l'état fondu de réacteur est de 0,5-6 heures, le mélange à l'état fondu d'extrudeuse comprend un mélange à l'état fondu par extrusion mono-vis ou un mélange à l'état fondu par extrusion bi-vis, une température pour le mélange à l'état fondu d'extrudeuse est de 115°C-295°C, et une vitesse de rotation de vis est de 5 tr/min-35 tr/min.

7. Utilisation du matériau polyester préparé par le procédé de préparation selon l'une quelconque des revendications 1-6 dans la préparation de plastiques techniques, de films optiques, de soie industrielle ou de matériaux d'emballage alimentaire.

8. Procédé de traitement d'un film de polyester, comprenant :
l'alimentation du matériau polyester préparé par le procédé de préparation selon l'une quelconque des revendications 1-6 dans une extrudeuse mono-vis pour l'extrusion à l'état fondu, et la permission à un fluide fondu de couler sur un rouleau de refroidissement rotatif pour obtenir une feuille épaisse de coulée ; et
le préchauffage, l'étirement longitudinal, le préchauffage à nouveau et l'étirement transversal de la feuille épaisse de coulée en séquence, puis la réalisation d'un durcissement thermique pour obtenir le film de polyester.

9. Procédé de traitement d'un produit en plastique moulé, comprenant : le mélange du matériau polyester préparé par le procédé de préparation selon l'une quelconque des revendications 1-6 avec un matériau de renforcement, puis le traitement du mélange ci-dessus sous la forme d'un produit requis au moins à travers l'un quelconque parmi le pressage en moule, la stratification, le moulage par transfert et la coulée, puis le durcissement pour obtenir le produit requis.

10. Structure de film composite multicouche, comprenant une pluralité de couches de structure stratifiée qui sont constituées de matériaux en forme de film ou de matériaux en paillettes, dans laquelle au moins une couche de structure est un film formé par le matériau polyester préparé par le procédé de préparation selon l'une quelconque des revendications 1-6, ou dans laquelle au moins deux couches de structure adjacentes sont reliées de manière fixe à travers le matériau polyester préparé par le procédé de préparation selon l'une quelconque des revendications 1-6.
